(19) Europäisches Patentamt / European Patent Office / Office européen des brevets

(11) EP 3 067 325 A1

(12) # EUROPEAN PATENT APPLICATION
published in accordance with Art. 153(4) EPC

(43) Date of publication:
**14.09.2016 Bulletin 2016/37**

(21) Application number: **14861081.9**

(22) Date of filing: **07.11.2014**

(51) Int Cl.:
***C02F 1/469*** *(2006.01)*
***B01D 61/46*** *(2006.01)*
***B01D 69/10*** *(2006.01)*
***B01D 69/12*** *(2006.01)*
***B01D 71/40*** *(2006.01)*

(86) International application number:
**PCT/JP2014/079558**

(87) International publication number:
**WO 2015/068797 (14.05.2015 Gazette 2015/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **07.11.2013 JP 2013231050**

(71) Applicant: **Fujifilm Corporation**
**Minato-ku**
**Tokyo 106-8620 (JP)**

(72) Inventors:
- **IKEDA, Morihito**
  **Ashigarakami-gun**
  **Kanagawa 258-8577 (JP)**
- **SUZUKI, Ryota**
  **Ashigarakami-gun**
  **Kanagawa 258-8577 (JP)**

(74) Representative: **Hoffmann Eitle**
**Patent- und Rechtsanwälte PartmbB**
**Arabellastraße 30**
**81925 München (DE)**

(54) **ION EXCHANGE MEMBRANE ELECTRODE ASSEMBLY, METHOD FOR MANUFACTURING SAME, AND CAPACITOR DEMINERALIZATION DEVICE**

(57) Provided are an ion exchange membrane electrode assembly including an ion exchange membrane which is on an electrode, is made of an ion exchange resin, and has a modulus of elasticity of 50 MPa or less, a method for producing the ion exchange membrane electrode assembly, and a capacitor deionization device.

FIG. 1A

FIG. 1B

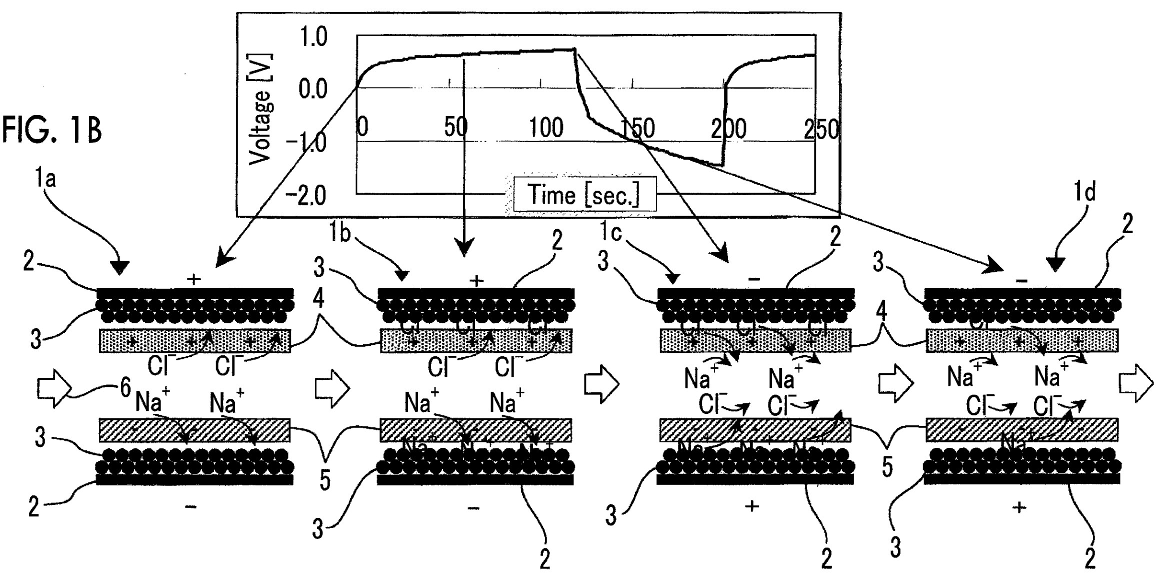


EP 3 067 325 A1

## Description

## BACKGROUND OF THE INVENTION

1. Field of the Invention

The present invention relates to an ion exchange membrane electrode assembly, a method for producing the ion exchange membrane electrode assembly, and a capacitor deionization device.

2. Description of the Related Art

Examples of a deionization process for removing electronically ions from an aqueous liquid include electrodeionization (EDI), continuous electrodeionization (CEDI), and electrodialysis (ED).

In these methods, in order to reduce electricity consumption, various researches have been conducted on ion exchange membranes to be used.

Among the processes of electrically removing ions as described above, as a method of performing deionization by adsorbing ions, capacitor deionization or super capacitor deionization have been researched and developed. The capacitor deionization and the super capacitor deionization are seldom accompanied by oxidation-reduction reaction in an electrode, and thus deionization can be performed stably and with low energy consumption. Examples of the capacitor deionization and the super capacitor deionization include (1) performing deionization by performing electrification between electrodes and obtaining ions in the flow path through ion exchange membranes as an electric double layer of the electrode surface and (2) performing continuous deionization by repeating electrification in a direction opposite to the deionization, discharge of captured ions, and recycling of electrodes (see JP2010-513018A).

## SUMMARY OF THE INVENTION

In the capacitor deionization, ions in a flow path are captured on an electrode surface through an ion exchange membrane. However, as the captured amount increases, electric resistance increases, and thus it is necessary to increase the voltage between the electrodes. If the voltage is increased slowly and greatly exceeds the oxidation-reduction potential of the water or captured ion, not only various oxidation-reduction reactions occur so as to decrease deionization efficiency, but also pH changes or gas such as chlorine or hydrogen is generated, so as to exert adverse effects.

Therefore, the present inventors have considered that preventing electric resistance from increasing by capturing of the ions, while efficiency of discharge is maintained is an important factor of continuous deionization and have researched specific means.

In addition, JP2010-513018A suggests causing the electric resistance of the ion exchange membrane to be in the range of 0.1 $\Omega cm^2$ to 50 $\Omega cm^2$, but does not disclose effective specific means for decreasing the electric resistance as the ion exchange membrane electrode assembly.

Accordingly, the invention is to provide an ion exchange membrane electrode assembly that can efficiently perform deionization by decreasing an electric resistance of an ion exchange membrane electrode assembly and extending continuous electrification deionization time, a method for producing the ion exchange membrane electrode assembly, and a capacitor deionization device.

The invention is to provide an ion exchange membrane electrode assembly that can perform deionization of tap water or the like with low electricity consumption or the like and that can be used for a long period of time by recycling, a method for producing the ion exchange membrane electrode assembly, and a capacitor deionization device.

The present inventors have researched various capacitor deionization devices and methods in the related art and interpreted various causes of the increase of the electric resistance and the increase of the voltage which are important points of the improvement, to conduct research.

As a result, it has been known that it is possible to decrease this electric resistance by improving an ion exchange membrane which has not been assumed or predicted at all. Also, a structure, a polymer type, and physical properties of the ion exchange membrane are analyzed and researched in various points of view, to find that the electric resistance of the ion exchange membrane electrode assembly can be reduced by adjusting the modulus of elasticity of the ion exchange membrane. The invention has been conceived in this knowledge.

That is, the objects of the invention have been solved in the following means.

<1> An ion exchange membrane electrode assembly, comprising: an ion exchange membrane which is on an electrode, is made of an ion exchange resin, and has a modulus of elasticity of 50 MPa or less.

<2> The ion exchange membrane electrode assembly according to <1>, in which the modulus of elasticity is 35 MPa or less.

<3> The ion exchange membrane electrode assembly according to <1> or <2>, in which an ion absorbent is provided between the electrode and the ion exchange membrane.
<4> The ion exchange membrane electrode assembly according to any one of <1> to <3>, in which air or gas is not included between the electrode and the ion exchange membrane.
<5> The ion exchange membrane electrode assembly according to any one of <1> to <4>, in which the ion exchange membrane electrode assembly is used in order to adsorb or desorb ions in a flow path.
<6> The ion exchange membrane electrode assembly according to any one of <1> to <5>, in which the ion exchange membrane electrode assembly is for capacitor deionization.
<7> The ion exchange membrane electrode assembly according to any one of <1> to <6>, in which the ion exchange membrane is a composite membrane of nonwoven fabric and a ion exchange resin.
<8> The ion exchange membrane electrode assembly according to <7>, in which a diameter of 50% or more of fibers in the nonwoven fabric is less than 5 $\mu$m.
<9> The ion exchange membrane electrode assembly according to <7>, in which a diameter of 1% or greater and less than 20% of the fibers in the nonwoven fabric is 5 $\mu$m or greater.
<10> The ion exchange membrane electrode assembly according to any one of <1> to <9>, in which ion exchange capacity of the ion exchange membrane is 2.5 meq/g or less.
<11> The ion exchange membrane electrode assembly according to any one of <1> to <10>, in which the ion exchange resin is a resin including a (meth)acryl component.
<12> The ion exchange membrane electrode assembly according to <11>, in which the (meth)acryl component is (meth)acrylamide or (meth)acrylester.
<13> The ion exchange membrane electrode assembly according to any one of <1> to <10>, in which the electrode is a positive electrode, and the ion exchange membrane is an anion exchange membrane.
<14> A method for producing the ion exchange membrane electrode assembly according to any one of <1> to <13>, comprising: joining the ion exchange membrane and the electrode such that air or gas is not included therebetween.
<15> The method for producing the ion exchange membrane electrode assembly according to <14>, in which the joining is pressure-joining.
<16> A capacitor deionization device comprising: two pairs of ion exchange membrane electrode assemblies that have ion exchange membranes consisting of an ion exchange resin, on the electrode; and a flow path that is in contact with the respective two pairs of the ion exchange membranes, in which a modulus of elasticity of at least one of the ion exchange membrane is 50 MPa or less.
<17> The capacitor deionization device according to <16>, in which a modulus of elasticity of each of the ion exchange membranes is 50 MPa or less.
<18> The capacitor deionization device according to <16> or <17>, further comprising: an ion absorbent between the electrode and the ion exchange membrane.
<19> The capacitor deionization device according to any one of <16> to <18>, in which air or gas is not included between the electrode and the ion exchange membrane.

In this specification, the expression "to" is used as the meaning of including numerical values described before and after the expression as the lower limit and the upper limit.
In addition, in each general formula, unless described otherwise, in a case where there are plural groups having the same reference numeral, these may be identical to or different from each other. In the same manner, in a case where plural partial structures are repeated, the repetition means both cases of repeating the same repetitions and a mixture of different repetitions in a regulated range.
Further, a geometric isomer which is a substitution style in a double bond in each general formula is an E body or a Z body, or a mixture thereof, unless described otherwise, even if one of the geometrical isomer is described for the convenience of description.
In the invention, "(meth)acryl" includes products in which not only a methyl group but also an alkyl group is substituted at an $\alpha$ position of an acyl group, such as acryl or methacryl, and collectively denotes acids thereof, salts thereof, and esters or amides. That is, "(meth)acryl" includes both acryl acid ester, amide, or acid, or salts thereof, and $\alpha$-alkyl substituted acrylic acid ester, amide, or acid or salts thereof.
According to the invention, it is possible to provide an ion exchange membrane electrode assembly that can perform deionization of tap water or the like with low electricity consumption by decreasing the electric resistance and that can be used for a long period of time by recycling, a method for producing the ion exchange membrane electrode assembly, and a capacitor deionization device.
Aforementioned and other characteristics and advantages are clearly described with appropriate reference to the accompanying diagrams.

## BRIEF DESCRIPTION OF THE DRAWINGS

Figs. 1A and 1B are diagrams schematically illustrating a relationship between a deionization and recycling process using an ion exchange membrane electrode assembly and an applied voltage.

## DESCRIPTION OF THE PREFERRED EMBODIMENTS

The ion exchange membrane electrode assembly of the invention has an ion exchange membrane (hereinafter, simply referred to as a "membrane") on the electrode. The ion exchange membrane is made of an ion exchange resin and has a modulus of elasticity of 50 MPa or less.
Hereinafter, the invention is described in detail.

<<Ion exchange membrane electrode assembly>>

In the ion exchange membrane electrode assembly of the invention, the ion exchange membrane is provided on the electrode.

<Electrode>

The electrode used in the ion exchange membrane electrode assembly of the invention is not particularly limited, as long as the electrode is an electrode that can be charged (electrified) by reversibly forming an electric double layer at the time of applying an voltage. Examples of the material of a positive electrode and a negative electrode include carbon, activated carbon, graphite, porous carbon particles, carbon aerogel, a carbon nanotube, a carbon fiber, and carbon fiber. In addition, these can be combined to be used. According to the invention, the material of the positive electrode and the negative electrode is more preferably graphite in view of electric resistance and strength.
In addition, the electrode may also function as a role of an ion absorbent described below. In this case, the electrode is the same as an ion absorbent described below except that the electrode is formed with the material that becomes the electrode.
The thickness of the electrode is preferably 0.001 mm to 10 mm, more preferably 0.01 mm to 1 mm, and still more preferably 0.05 mm to 0.5 mm. In addition, the thickness of the electrode in a case where the electrode also functions as an adsorbent is preferably 0.001 mm to 10 mm, more preferably 0.01 mm to 1 mm, and still more preferably 0.05 mm to 0.5 mm.
In addition, two pairs of the electrodes may be identical to or different from each other. However, in a case where the electrode also functions as the adsorbent, the two pairs of electrodes may be caused to be different electrodes in order to efficiently or selectively adsorb cations or anions.

<Adsorbent>

According to the invention, since the ions pass through the ion exchange membrane and are collected on the electrode surface, it is preferable to use an ion absorbent in order to increase the storage capacitance.
In view of height of the specific surface area and lowness of the electric resistance, the adsorbent is preferably activated carbon particles, activated carbon fibers, and activated carbon pastes, which are made of activated carbon. Among these, an activated carbon paste is more preferable.
In addition, the ions accumulated in the adsorbent have to be easily required at the time of discharging.
In addition, in a case where adsorbent fine particles are used, an average particle diameter is preferably 0.01 μm to 100 μm, more preferably 0.1 μm to 10 μm, and still more preferably 0.5 μm to 5 μm. In addition, in a case where an adsorbing fiber is used, an average fiber diameter is preferably 0.01 μm to 100 μm, more preferably 0.1 μm to 10 μm, and still more preferably 0.5 μm to 5 μm.
One or two or more types of adsorbents may be used.
In addition, both of the two pairs of ion exchange membrane electrode assemblies preferably have ion absorbents. However, according to the purpose, one of those may have an ion absorbent.

<Ion exchange membrane>

According to the invention, the ion exchange membrane means a resin membrane obtained by polymerizing and curing only the resin composition for forming the ion exchange membrane or a film obtained by coating or impregnating a porous support such as a nonwoven fabric (specifics are described below) with the resin composition, performing polymerizing and curing, and incorporating the porous support as a portion of the film in an inseparable state in order

to reinforce the resin film. Accordingly, in a case where this porous support is not included, the physical properties of the ion exchange membrane or the like are physical properties of the resin film obtained by polymerizing and curing only the resin composition for forming the ion exchange membrane. In a case where the ion exchange membrane combined with the porous support, the physical properties of the ion exchange membrane are physical properties in a state of being incorporated.

Any type of the ion exchange membrane according to the invention may be used as long as the modulus of elasticity thereof is 50 MPa or less.

The modulus of elasticity is preferably 35 MPa or less and more preferably 25 MPa or less. The lower limit of the modulus of elasticity of the ion exchange membrane is not particularly limited. However, in view of handling easiness, the modulus of elasticity is practically 1 MPa or greater.

The modulus of elasticity is a modulus of elasticity of the ion exchange membrane, alone. For example, the modulus of elasticity is a value that is calculated and obtained by initial inclination when a correlation of a stress on the displacement at the time of applying deformation is measured with a tensile stress tester.

The modulus of elasticity can be adjusted to 50 MPa or less, by adjusting a type of a resin component configuring an ion exchange membrane, crosslinking density by a crosslinking agent, and a cure degree, adjusting of a type of an ionic group incorporated in the resin and a density thereof, and adjusting a modulus of elasticity of the support by appearance in a case of a composite membrane with the support such as nonwoven fabric.

Among these, according to the invention, the adjustment is preferably performed by adjusting a crosslinking density of a resin component that configures an ion exchange membrane and combining the ion exchange membrane with a support having a low modulus of elasticity by appearance.

Hereinafter, these are described in sequence.

<Resin composition>

Any type of the resin composition of the polymer that configures the ion exchange membrane can be used, as long as the resin composition is a resin that is suggested as the ion exchange membrane. However, according to the invention, the resin including a (meth)acryl component is preferable. The content of the resin including this (meth)acryl component is preferably 50 parts by mass or greater, more preferably 80 parts by mass or greater, and particularly preferably 95 parts by mass or greater with respect to 100 parts by mass of the total resin that configures the ion exchange membrane.

The resin including a (meth)acryl component may be a polymer of (meth)acrylamide or (meth)acrylester and a crosslinkable monomer component having two or more (meth)acryl portions, that is, a copolymer with a crosslinking agent.

The ion exchange membrane according to the invention has an ionic group (a dissociation group, a cation group, and an anion group, as described below), but the ionic group may be incorporated in the resin, in any way.

For example, the ionic group may be incorporated by any one of (i) a polymerization reaction between a crosslinkable multifunctional polymerizable compound not having an ionic group and a monofunctional polymerizable compound having an ionic group, (ii) a polymerization reaction between a crosslinkable multifunctional polymerizable compound having an ionic group and a monofunctional polymerizable compound not having an ionic group, (iii) a polymerization reaction between a crosslinkable multifunctional polymerizable compound having an ionic group and a monofunctional polymerizable compound having an ionic group, or (iv) a polymerization reaction only with a crosslinkable multifunctional polymerizable compound having an ionic group.

According to the invention, among these incorporating methods, in view of availability and a low price of a raw material, the incorporating method (i) is preferable, and described below in detail.

The ion exchange membrane according to the invention is preferably produced by irradiating a composition (hereinafter, referred to as a "resin composition") respectively containing (A) a multifunctional polymerizable compound, (B) a monofunctional polymerizable compound having an ionic group, (C) a monofunctional polymerizable compound not having an ionic group, (D) a polymerization initiator, (E) an polymerization inhibitor, and (F) a solvent, as required, with ultraviolet rays or electron beams and heating and polymerizing the resin composition, as required. That is, the composition containing these is irradiated with the ultraviolet rays or electron beams and heated and polymerized, as required, such that the polymerization and curing reaction is performed on this composition and a membrane is formed.

Hereinafter, respective components of the composition for producing an ion exchange membrane according to the invention are described.

<(A) Multifunctional polymerizable compound>

The multifunctional polymerizable compound according to the invention is preferably a multifunctional polymerizable compound General Formula (A) below.

General Formula (A)

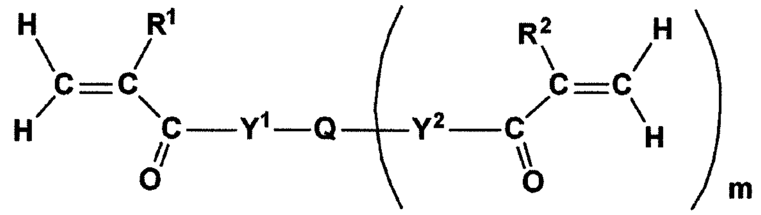

In General Formula (A), each of $R^1$ and $R^2$ independently represents a hydrogen atom or an alkyl group, and each of $Y^1$ and $Y^2$ independently represents -NRa- or -O-. Here, Ra represents a hydrogen atom or an alkyl group. m represents a number which is 1 or greater. Q represents a m-1-valent linking group.

Here, when m is 2 or greater, plural $R^2$'s may be identical to or different from each other, and plural $Y^2$'s may be identical to or different from each other.

The alkyl group in $R^1$ and $R^2$ is a straight chain or branched alkyl group, and the number of carbon atoms is preferably 1 to 12, more preferably 1 to 8, still more preferably 1 to 4, and particularly preferably 1.

Among these, $R^1$ and $R^2$ are preferably hydrogen atoms or methyl groups, and most preferably hydrogen atoms.

The alkyl group in $R^1$ and $R^2$ may have a substituent, and the substituent selected from a substituent group $\alpha$ below is preferable as this substituent.

Substituent group $\alpha$ includes: an alkyl group (an alkyl group preferably having 1 to 30 carbon atoms, more preferably having 1 to 20 carbon atoms, and particularly preferably having 1 to 10 carbon atoms, for example, methyl, ethyl, isopropyl, t-butyl, n-octyl, 2-ethylhexyl, n-decyl, and n-hexadecyl), a cycloalkyl group (a cycloalkyl group preferably having 3 to 30 carbon atoms, more preferably having 3 to 20 carbon atoms, and particularly preferably having 3 to 10 carbon atoms, and examples thereof include cyclopropyl, cyclopentyl, and cyclohexyl), an alkenyl group (an alkenyl group preferably having 2 to 30 carbon atoms, more preferably having 2 to 20 carbon atoms, particularly and preferably having 2 to 10 carbon atoms, and examples thereof include vinyl, allyl, 2-butenyl, and 3-pentenyl), an alkynyl group (an alkynyl group preferably having 2 to 30 carbon atoms, more preferably having 2 to 20 carbon atoms, and particularly preferably having 2 to 10 carbon atoms, and examples thereof include propargyl, and 3-pentynyl), an aryl group (an aryl group preferably having 6 to 30 carbon atoms, more preferably having 6 to 20 carbon atoms, and particularly preferably having 6 to 12 carbon atoms, and examples thereof include phenyl, p-methylphenyl, naphthyl, and anthranil), an amino group (that includes an amino group, an alkylamino group, and an arylamino group and that is an amino group preferably having 0 to 30 carbon atoms, more preferably having 0 to 20 carbon atoms, and particularly preferably having 0 to 10 carbon atoms, and examples thereof include amino, methylamino, dimethylamino, diethylamino, dibenzylamino, diphenylamino, and ditolylamino), an alkoxy group (an alkoxy group preferably having 1 to 30 carbon atoms, more preferably having 1 to 20 carbon atoms, and particularly preferably having 1 to 10 carbon atoms, and examples thereof include methoxy, ethoxy, butoxy, and 2-ethylhexyloxy), an aryloxy group (an aryloxy group preferably having carbon atoms 6 to 30, more preferably having 6 to 20 carbon atoms, and particularly preferably having 6 to 12 carbon atoms, and examples thereof include phenyloxy, 1-naphthyloxy, and 2-naphthyloxy), and a hetero ring oxy group (a hetero ring oxy group preferably having 2 to 30 carbon atoms, more preferably having 2 to 20 carbon atoms, and particularly preferably having 2 to 12 carbon atoms, examples thereof include pyridyloxy, pyradyloxy, pyrimidyloxy, and quinolyloxy).

Substituent group $\alpha$ includes an acyl group (an acyl group preferably 1 to 30 having carbon atoms, more preferably 1 to 20 having carbon atoms, and particularly preferably 1 to 12 having carbon atoms, and examples thereof include acetyl, benzoyl, formyl, and pivaloyl), an alkoxycarbnyl group (an alkoxycarbnyl group preferably having 2 to 30 carbon atoms, more preferably having 2 to 20 carbon atoms, and particularly preferably having 2 to 12 carbon atoms, and examples thereof include methoxycarbnyl and ethoxycarbnyl), an aryloxycarbnyl group (an aryloxycarbnyl group preferably having 7 to 30 carbon atoms, more preferably having 7 to 20 carbon atoms, and particularly preferably having 7 to 12 carbon atoms, and examples thereof include phenyloxycarbnyl), an acyloxy group (an acyloxy group preferably having 2 to 30 carbon atoms, more preferably having 2 to 20 carbon atoms, and particularly preferably having 2 to 10 carbon atoms, and examples thereof include acetoxy and benzoyloxy), and an acylamino group (an acylamino group preferably having 2 to 30 carbon atoms, more preferably having 2 to 20 carbon atoms, and particularly preferably having 2 to 10 carbon atoms, and examples thereof include acetylamino and benzoylamino).

Substituent group $\alpha$ includes an alkoxycarbnylamino group (an alkoxycarbnylamino group preferably having 2 to 30 carbon atoms, more preferably having 2 to 20 carbon atoms, and particularly preferably having 2 to 12 carbon atoms, and examples thereof include methoxycarbnylamino), an aryloxycarbnylamino group (an aryloxycarbnylamino group preferably having 7 to 30 carbon atoms, more preferably having 7 to 20 carbon atoms, and particularly preferably

having 7 to 12 carbon atoms, and examples thereof include phenyloxycarbnylamino), an alkyl or arylsulfonylamino group (preferably having 1 to 30 carbon atoms, more preferably having 1 to 20 carbon atoms, and particularly preferably having 1 to 12 carbon atoms, and examples thereof include methanesulfonylamino and benzenesulfonylamino), and a sulfamoyl group (that includes a sulfamoyl group, alkyl or arylsulfamoyl group, and that is a sulfamoyl group preferably having 0 to 30 carbon atoms, more preferably having 0 to 20 carbon atoms, and particularly preferably having 0 to 12 carbon atoms, and examples thereof include sulfamoyl, methylsulfamoyl, dimethylsulfamoyl, and phenylsulfamoyl).

Substituent group $\alpha$ includes a carbamoyl group (that includes a carbamoyl group and an alkyl or arylcarbamoyl group and that is a carbamoyl group preferably having 1 to 30 carbon atoms, more preferably having 1 to 20 carbon atoms, and particularly preferably having 1 to 12 carbon atoms, examples thereof include carbamoyl, methylcarbamoyl, diethylcarbamoyl, and phenylcarbamoyl), an alkylthio group (an alkylthio group preferably having 1 to 30 carbon atoms, more preferably having 1 to 20 carbon atoms, and particularly preferably having 1 to 12 carbon atoms, examples thereof include methylthio and ethylthio), an arylthio group (an arylthio group preferably having 6 to 30 carbon atoms, more preferably having 6 to 20 carbon atoms, and particularly preferably having 6 to 12 carbon atoms, and examples thereof include phenylthio), and a hetero ring thio group (a hetero ring thio group preferably having 2 to 30 carbon atoms, more preferably having 2 to 20 carbon atoms, and particularly preferably having 2 to 12 carbon atoms, and examples thereof include pyridylthio, 2-benzimidazolylthio, 2-benzoxazolylthio, and 2-benzothiazolylthio).

Substituent group $\alpha$ includes an alkyl or arylsulfonyl group (an alkyl or arylsulfonyl group preferably having 1 to 30 carbon atoms, more preferably having 1 to 20 carbon atoms, and particularly preferably having 1 to 12 carbon atoms, and examples thereof include mesyl and tosyl), an alkyl or arylsulfmyl group (an alkyl or arylsulfinyl group preferably having 1 to 30 carbon atoms, more preferably having 1 to 20 carbon atoms, and particularly preferably having 1 to 12 carbon atoms, and examples thereof include methanesulfinyl and benzenesulfinyl), an ureido group (an ureido group preferably having 1 to 30 carbon atoms, more preferably having 1 to 20 carbon atoms, and particularly preferably having 1 to 12 carbon atoms, and examples thereof include ureido, methylureido, and phenylureido), a phosphoric acid amide group (a phosphoric acid amide group preferably having 1 to 30 carbon atoms, more preferably having 1 to 20 carbon atoms, and particularly preferably having 1 to 12 carbon atoms, and examples thereof include diethylphosphoric acid amide and phenylphosphoric acid amide), a hydroxy group, a mercapto group, and a halogen atom (examples thereof include a fluorine atom, a chlorine atom, a bromine atom, and an iodine atom, and more preferably a fluorine atom).

Substituent group $\alpha$ includes a cyano group, a sulfo group, a carboxyl group, an oxo group, a nitro group, a hydroxamic acid group, a sulfino group, a hydrazino group, an imino group, a hetero ring group (a hetero ring group preferably having 1 to 30 carbon atoms and more preferably having 1 to 12 carbon atoms, and as the ring-forming heteroatom, a nitrogen atom, an oxygen atom, and a sulfur atom are preferable, and specific examples thereof include imidazolyl, pyridyl, quinolyl, furyl, thienyl, piperidyl, morpholino, benzoxazolyl, benzimidazolyl, benzothiazolyl, a carbazoyl group, and an azepinyl group), a silyl group (a silyl group preferably having 3 to 40 carbon atoms, more preferably having 3 to 30 carbon atoms, and particularly preferably having 3 to 24 carbon atoms, and examples thereof include trimethylsilyl and triphenylsilyl), and a silyloxy group (a silyloxy group preferably having 3 to 40 carbon atoms, more preferably having 3 to 30 carbon atoms, and particularly preferably having 3 to 24 carbon atoms, and examples thereof include trimethylsilyloxy and triphenylsilyloxy).

These substituents may be further substituted with one or more substituents selected from the substituent group $\alpha$.

In addition, according to the invention, when plural substituents exist in one structural portion, these substituents are connected to each other to form a ring or condensed with a portion or all of the structural portion to an aromatic ring or an unsaturated hetero ring.

The alkyl group in Ra has the same meaning with the alkyl group in $R^1$ and $R^2$, and a preferable range thereof is also the same. Ra is preferably a hydrogen atom.

m is preferably an integer of 1 to 10, more preferably an integer of 1 to 6, still more preferably an integer of 1 to 4, and particularly preferably 1 or 2. Among these, 1 is most preferable.

Q represents a m-1-valent linking group, and the linking group may be an aliphatic linking group or an aromatic linking group. According to the invention, an aliphatic linking group is preferable, and an atom bonding $Y^1$ and $Y^2$ is a carbon atom, and an m-1-valent hydrocarbon group that may have -O- interposed therebetween is preferable.

Here, the number of carbon atoms of the m-1-valent hydrocarbon group is preferably 1 to 20 and more preferably 1 to 10.

The multifunctional polymerizable compound expressed by General Formula (A) is preferably a multifunctional polymerizable compound expressed by General Formula (A1) below.

General Formula (A1)

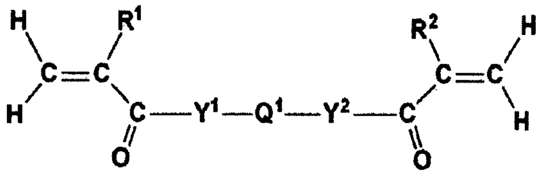

In General Formula (A1), $R^1$, $R^2$, $Y^1$, and $Y^2$ have the same meaning as $R^1$, $R^2$, $Y^1$, and $Y^2$ in General Formula (A), and the preferable range thereof is also the same. $Q^1$ represents a bivalent linking group.

$Q^1$ is preferably an alkylene group or an alkylene group of which an atom bonding $Y^1$ and $Y^2$ is a carbon atom and that may have -O- interposed therebetween.

The multifunctional polymerizable compound expressed by General Formula (A) is more preferably a multifunctional polymerizable compound expressed by General Formulae (A1-1) or (A1-2) below.

General Formula (A1-1)

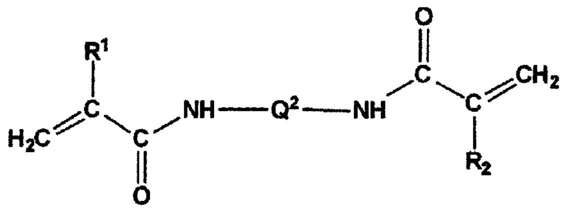

General Formula (A1-2)

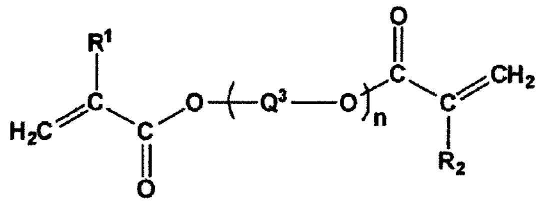

In General Formulae (A1-1) and (A1-2), $R^1$ and $R^2$ have the same meaning as $R^1$ and $R^2$ in General Formula (A), and the preferable range thereof is also the same. $Q^2$ represents an alkylene group or $-(C_xH_{2x-2}-O)_n]-C_xH_{2x-2}-$. Here, x represents 2 or 3, and n1 represents 1 to 6. $Q^3$ represents an ethylene group or a propylene group, and n represents an integer of 1 to 10.

The number of carbon atoms in the alkylene group in $Q^1$ and $Q^2$ is preferably 1 to 10, more preferably 1 to 6, still more preferably 1 to 3, and particularly preferably 1 or 2. Among these, 1 is most preferable.

n1 in $Q^2$ is preferably 1 to 4 and more preferably 1 or 2.

According to the invention, $Q^1$ and $Q^2$ are preferably an alkylene group.

$Q^3$ is preferably an ethylene group and n is preferably 2 to 4.

According to the invention, the multifunctional polymerizable compound expressed by General Formula (A) may be used singly, or two or more types thereof may be used in combination.

According to the invention, in a case where only one type of multifunctional polymerizable compound, that is, crosslinkable polymerizable compound is used, both of $Y^1$ and $Y^2$ in General Formula (A) are preferably a polymerizable compound of (meth)acrylamide expressed by -NRa-. Among these, the multifunctional polymerizable compound expressed by General Formula (A1-1) is preferable.

In addition, in a case where 2 or more types are used in combination, a combination including a polymerizable compound of (meth)acrylamide in which both of $Y^1$ and $Y^2$ in General Formula (A) are -NRa- and a polymerizable compound of (meth)acrylester in which both of $Y^1$ and $Y^2$ in General Formula (A) are -O- is preferable.

Here, in a case where the crosslinkable polymerizable compound of (meth)acrylamide and the crosslinkable polymerizable compound of (meth)acrylester are combined, the mass ratio of the polymerizable compound of (meth)acrylamide: the polymerizable compound of (meth)acrylester is preferably 1:5 to 5:1.

Specific examples of multifunctional polymerizable compound expressed by General Formula (A) are described below, but the invention is not limited thereto.

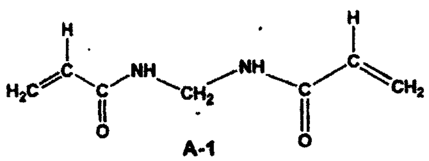

A-1

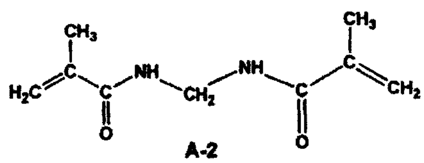

A-2

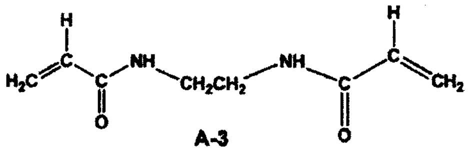
A-3

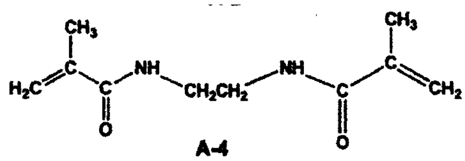
A-4

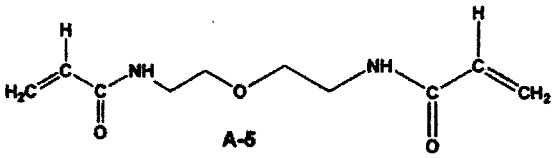
A-5

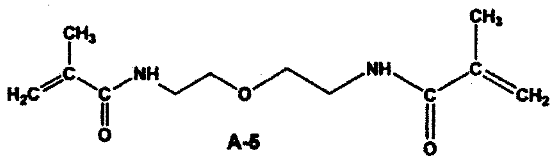
A-5

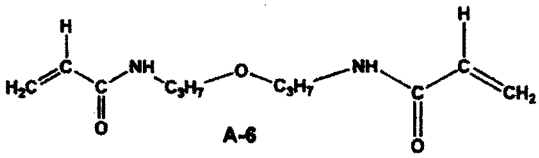
A-6

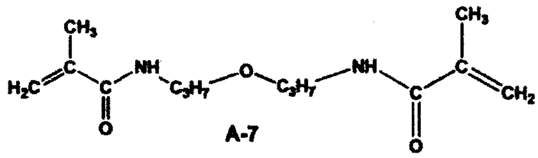
A-7

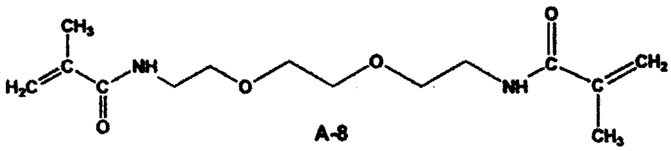
A-8

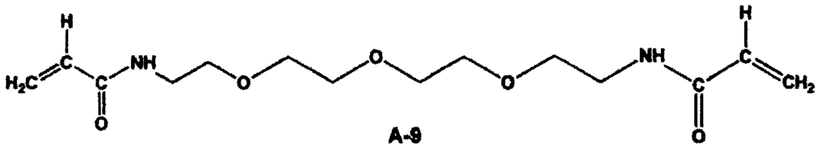
A-9

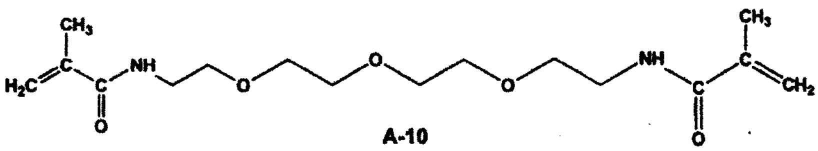
A-10

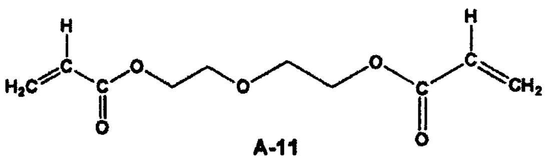
A-11

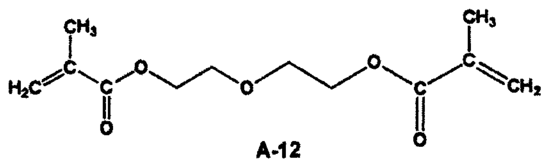
A-12

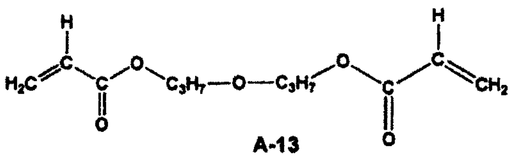
A-13

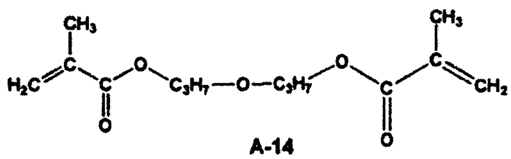
A-14

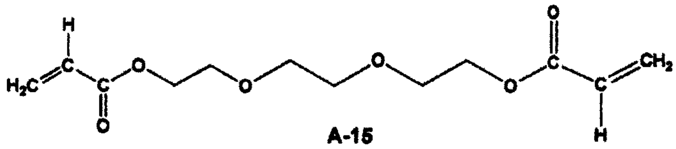
A-15

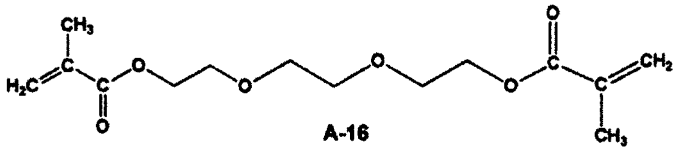

A-16

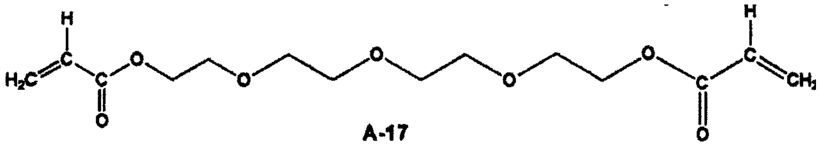

A-17

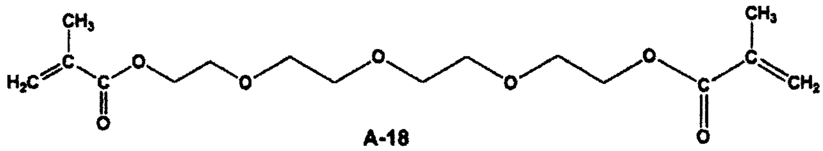

A-18

(A) The multifunctional polymerizable compound is commercially available from Shin-Nakamura Chemical Co., Ltd. and Tokyo Chemical Industry Co., Ltd. or can be easily synthesized in a usual method.

<Monofunctional polymerizable compound>

The resin composition according to the invention may include (B) a monofunctional polymerizable compound having an ionic group. In addition, if necessary, the resin composition may include a monofunctional polymerizable compound not having (C) the ionic group for obtaining a unit structure of a third copolymerization component.

<(B) Monofunctional polymerizable compound having ionic group>

(B) The monofunctional polymerizable compound having the ionic group is preferably a monofunctional polymerizable compound expressed by General Formula (B) below.

General Formula (B)

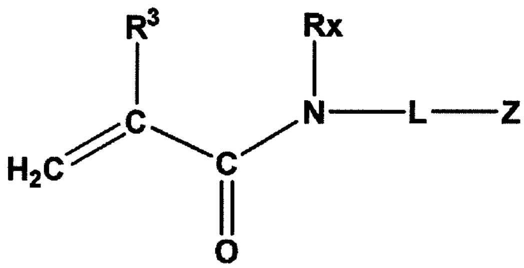

In General Formula (B), $R^3$ has the same meaning as $R^1$ and $R^2$ in General Formula (A). Rx represents a hydrogen atom, an alkyl group, or an aryl group. L represents a bivalent linking group of which atoms on both sides of a bond are carbon atoms.

In General Formula (B), Z represents an ionic group.

Here, an ionic group is a group that directly involves in an ion exchange on the ion exchange membrane, and includes a dissociable group, an anion group, and a cation group. The dissociable group is a hydroxy group, a sulfo group, a carboxyl group, a phosphoric acid group, or the like, and means a group that can be dissociated in an aqueous solution or an alkali aqueous solution.

Z strongly performs ion interaction with an ion adsorbed by the dissociation group, the anion group, or the cation group which is the ionic group described above.

Z is preferably a hydroxy group (particularly, phenolic or enolic hydroxy group), a sulfo group or salts thereof, a carboxy group or salts thereof, an onio group (an ammonio group, a pyridinio group, and a sulfonio group), a sulfo group or salts thereof, a carboxy group or salts thereof, and an onio group are more preferable.

In the cation exchange membrane, Z is preferably a hydroxy group (particularly, a phenolic or enolic hydroxy group), a sulfo group or salts thereof, a carboxy group or salts thereof, or a phosphoric acid group or salts thereof, and more preferably a sulfo group or salts thereof or a carboxy group or salts thereof.

Here, as a salt in a sulfo group or a carboxy group, a cation of an alkali metal atom, for example, a lithium cation, a potassium cation, and a sodium cation are preferable.

In the anion exchange membrane, Z is preferably an onio group and preferably a group expressed by General Formula (a) or (b) below.

$-N(Rb)_3^+X^-$ General Formula (a)

$-S(Rb)_2^+X^-$ General Formula (b)

In General Formulae (a) and (b), Rb represents an alkyl group or an aryl group. Plural Rb's may be identical to or different from each other, and two Rb's may be bonded to form a ring.

$X^-$ represents an negative ion.

The number of carbon atoms in the alkyl group in Rb is preferably 1 to 18, more preferably 1 to 12, and still more preferably 1 to 6. The alkyl group may have a substituent. As this substituent, a substituent selected from the substituent group $\alpha$ is preferable. Among these, an aryl group is preferable. In the alkyl group in which an aryl group in Rb is substituted, a benzyl group is preferable.

The number of carbon atoms in the aryl group in Rb is preferably 6 to 18 and more preferably 6 to 12.

The aryl group in Rb may have a substituent, and examples of this substituent include the substituent group $\alpha$.

A ring formed by bonding two Rb's is preferably 5 or 6-membered ring.

As this ring, in General Formula (a), a nitrogen-containing aromatic ring is preferable. Among these, a pyridine ring is preferable.

Examples of the negative ion of $X^-$ include a halogen ion, a carboxylic acid ion (for example, an acetic acid ion and a benzoic acid ion), a sulfuric acid ion, an organic sulfuric acid ion (for example, a methanesulfonic acid ion, a benzenesulfonic acid ion, and a p-toluenesulfonic acid ion), and $OH^-$.

Examples of the group expressed by General Formula (a) include trimethylammonio, triethylammonio, tributylammonio, dimethyl benzyl ammonio, dimethyl phenyl ammonio, dimethyl cetyl ammonio, and pyridinio.

Examples of the group expressed by General Formula (b) include dimethylsulfonio, methyl benzyl sulfonio, and methyl phenyl sulfonio.

Among groups expressed by General Formulae (a) and (b), a group expressed by General Formula (a) is preferable.

In General Formula (B), L represents a bivalent linking group in which atoms on both sides of a direct bond are carbon atoms. However, an alkylene group that may have an oxygen atom interposed therebetween in alkylene is preferable, an alkylene group with alkylene only is more preferable, an alkylene group having 2 to 10 carbon atoms is still more preferable.

Examples of the preferable alkylene group include an ethylene group, a propylene group, or $-C(CH_3)_2-CH_2-$ which is a dialkylethylene group having a branch on a nitrogen atom side of an amide group in General Formula (B).

Specific examples of the monofunctional polymerizable compound expressed by General Formula (B) are described below, but the invention is not limited thereto.

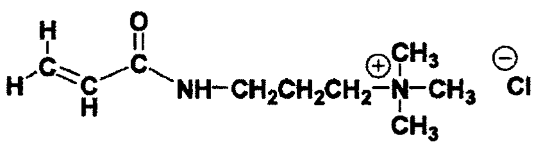

(B-1)

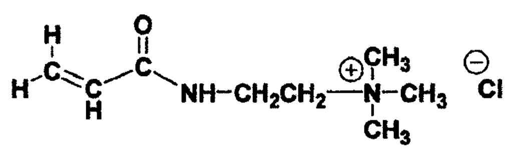

(B-2)

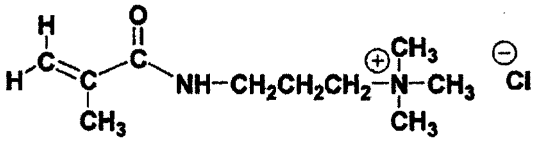

(B-3)

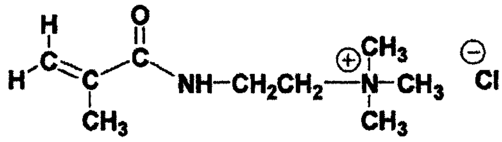

(B-4)

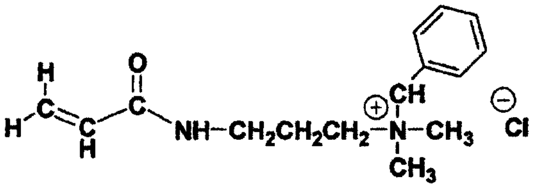

(B-5)

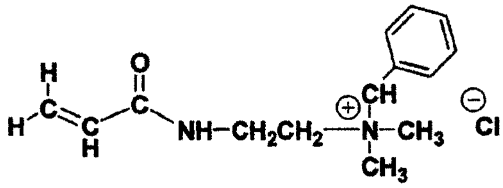

(B-6)

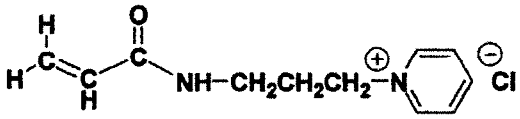

(B-7)

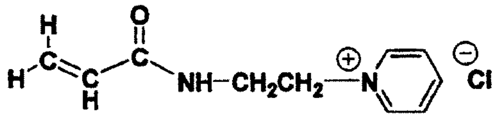

(B-8)

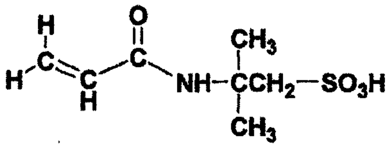

(B-9)

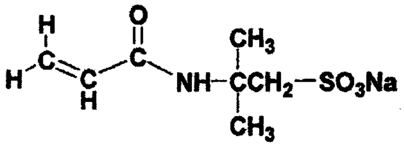

(B-10)

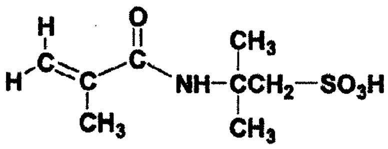

(B-11)

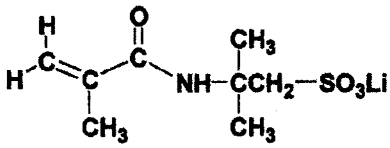

(B-12)

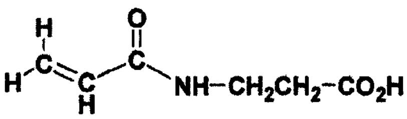

(B-13)

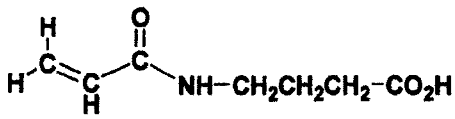

(B-14)

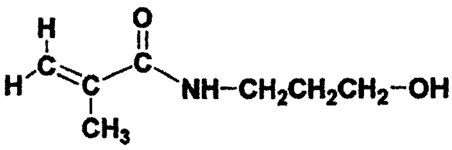

(B-15)

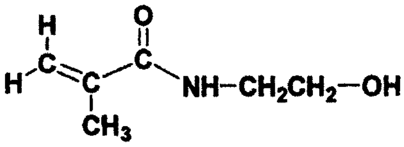

(B-16)

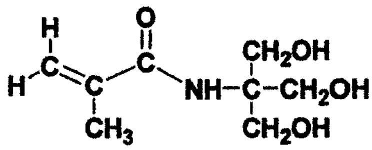

(B-17)

<(C) Monofunctional polymerizable compound not having ionic group>

As (C) the monofunctional polymerizable compound not having the ionic group, any compound can be used as long as the compound is the monofunctional polymerizable compound not having the ionic group. However, examples of the compound skeleton include a (meth)acrylate compound, a (meth)acrylamide compound, a vinylether compound, an aromatic vinyl compound, an N-vinyl compound (polymerizable monomer having an amide bond), and an allyl compound.

Among these, in view of stability of the obtained ion exchange membrane and the pH tolerance, a compound not having an ester bond, a (meth)acrylamide compound, a vinylether compound, aromatic vinyl compound, an N-vinyl compound (a polymerizable monomer having an amide bond), and an allyl compound are preferable, and a (meth)acrylamide compound is particularly preferable.

Examples of the monofunctional polymerizable compound not having the ionic group include compounds disclosed in JP2008-208190A and JP2008-266561A.

As (C) the monofunctional polymerizable compound not having the ionic group, the monofunctional polymerizable compound expressed by General Formula (C) below is preferable.

General Formula (C)

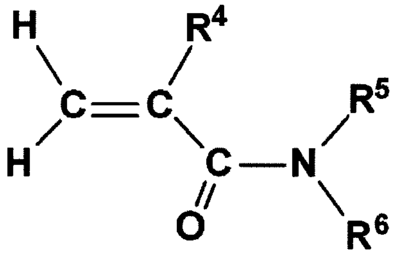

In General Formula (C), $R^4$ has the same meaning as $R^1$ and $R^2$ in General Formula (A), and the preferable range thereof is also the same. $R^5$ represents a hydrogen atom or an alkyl group, and $R^6$ represents an alkyl group. Here, an alkyl group of $R^5$ and $R^6$ may have a substituent, or $R^5$ and $R^6$ are bonded to each other to form a ring.

The number of carbon atoms of the alkyl group in $R^5$ and $R^6$ is preferably 1 to 18, more preferably 1 to 12, and still more preferably 1 to 6. Examples thereof include methyl, ethyl, n-propyl, isopropyl, n-butyl, t-butyl, n-pentyl, n-hexyl, n-octyl, t-octyl, n-decyl, and n-octadecyl.

In a case where an alkyl group in $R^5$ and $R^6$ has a substituent, the number of carbon atoms having an alkyl group portion is preferably 1 to 6 and preferably 1 to 3.

Examples of the substituent that may be included in the alkyl group in $R^5$ and $R^6$ include the substituents included in the substituent group $\alpha$ above. Among these, a group having high polarity is preferable, an acyl group and an amino group are more preferable, and particularly, an amino group is still more preferable. As the amino group, a tertiary amino group is preferable, and a group expressed by General Formula (c) below is preferable.

General Formula (c) $-N(Rb)_2$

In General Formula (c), Rb has the same meaning as Rb in General Formula (a), and the preferable range thereof is also the same.

Examples of group expressed by General Formula (c) include dimethylamino and diethylamino.

The group having high polarity can support an ionic group of (B) the monofunctional polymerizable compound having the ionic group and thus the efficiency of the ion exchange can be enhanced.

The ring formed by bonding $R^5$ and $R^6$ to each other is preferably a 5 or 6-membered ring, and a pyrrolidine ring, a piperazine ring, a piperadine ring, a morpholine ring, and a thiomorpholine ring are preferable.

In addition, one of $R^4$ and $R^5$ is preferably a hydrogen atom or a methyl group and particularly preferably a hydrogen atom.

The monofunctional polymerizable compound expressed by General Formula (C) is described below, but the invention is not limited thereto.

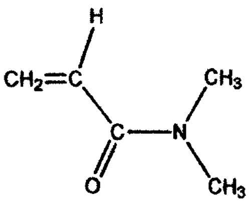
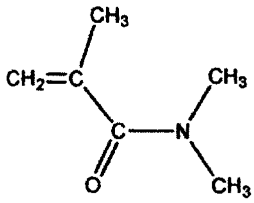
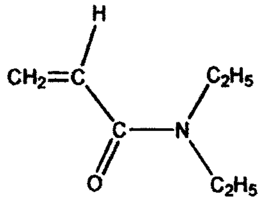
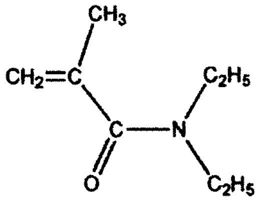

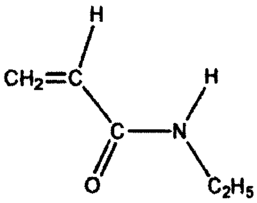
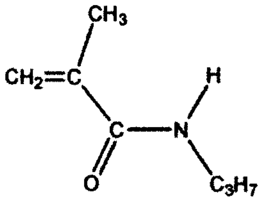
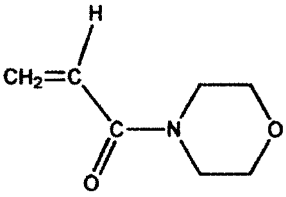
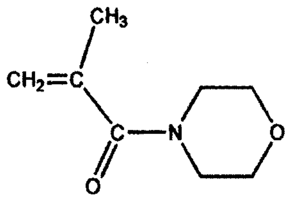

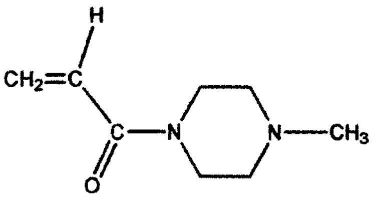
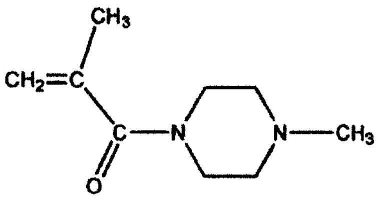
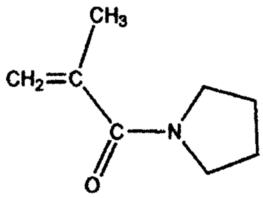

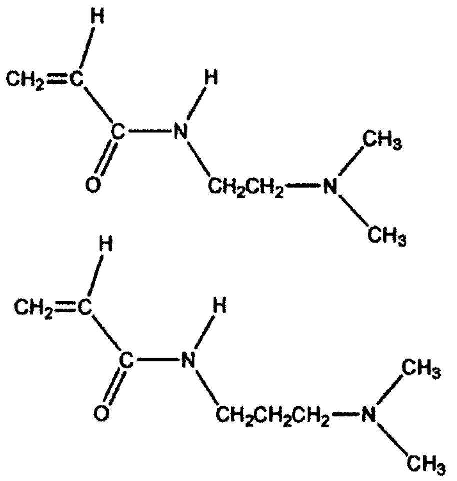
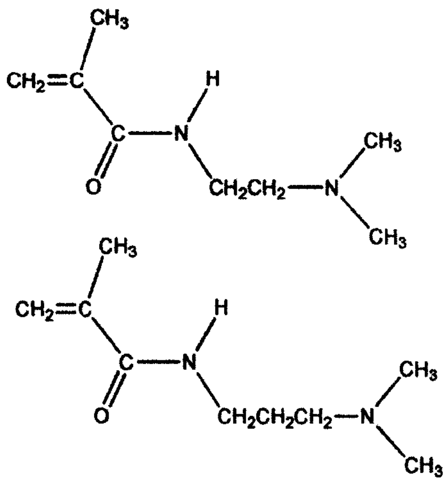

The monofunctional polymerizable compounds of (B) the component and (C) the component are commercially available from Wako Pure Chemical Industries, Ltd., Kohjin Co., Ltd., KH Neochem Co., Ltd., Fluka Chemical Corp., Sigma-Aldrich Co. LLC., and Toagosei Co., Ltd., and can be easily synthesized.

According to the invention, the content of the resin composition of (A) the component is preferably 5 parts by mass to 50 parts by mass and more preferably 10 parts by mass to 30 parts by mass with respect to 100 parts by mass of the total solid content. The content of the resin composition of (B) the component is preferably 30 parts by mass to 90 parts by mass and more preferably 50 parts by mass to 80 parts by mass with respect to 100 parts by mass of the total solid content. In addition, the content of the resin composition of (C) the component is preferably 0 parts by mass to 60 parts by mass and more preferably 0 parts by mass to 40 parts by mass with respect to the 100 parts by mass of the total solid content.

Meanwhile, the content of the 100 parts by mass of the total solid content of the resin composition of the compound having the (meth)acryl group is preferably 50 parts by mass to 99.5 parts by mass, more preferably 80 parts

by mass to 99 parts by mass, and still more preferably 90 parts by mass to 95 parts by mass.

In addition, since three-dimensional crosslinking is formed, the mass average molecular weight of the polymer configuring the ion exchange membrane according to the invention is several hundred thousand or greater, and cannot be substantially measured. Generally, the mass average molecular weight is considered to be infinite.

According to the invention, the crosslinking density of the polymer formed by reacting the compound having a (meth)acryl group is preferably 0.4 mmol/g to 2 mmol/g, more preferably 0.5 mmol/g to 1.5 mmol/g, and particularly preferably 0.6 mmol/g to 1.1 mmol/g. Since the crosslinking density and the modulus of elasticity of the membrane are strongly related, the modulus of elasticity can be controlled to be a desired value, by controlling the molecular weight or the amount of the multifunctional polymerizable compound as the crosslinking agent. The modulus of elasticity can be caused to be in the preferable range by causing the crosslinking density to be in the range of 0.4 mmol/g to 2 mmol/g.

<(D) Polymerization initiator>

According to the invention, the polymerization curing reaction is particularly preferably performed in the coexistence of the polymerization initiator.

As the polymerization initiator, any type of polymerization initiator can be used. However, according to the invention, the polymerization initiator (photo radical polymerization initiator) expressed by General Formula (PPI-1) or (PPI-2) below is preferable.

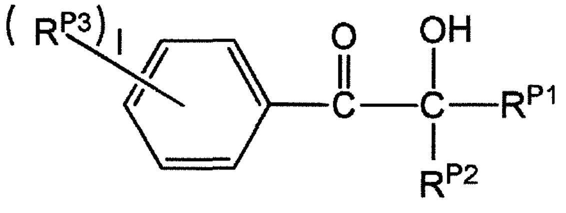

General Formula (PPI-1)

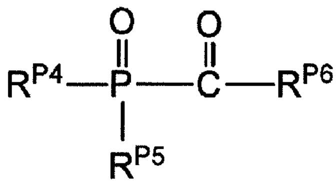

General Formula (PPI-2)

In General Formulae (PPI-1) and (PPI-2), each of $R^{P1}$ and $R^{P2}$ independently represents a hydrogen atom, an alkyl group, an alkoxy group, or an aryloxy group, $R^{P3}$ represents an alkyl group, an alkoxy group, or an aryloxy group, and 1 represents an integer of 0 to 5. $R^{P4}$ represents an alkyl group, an aryl group, an alkylthio group, or an arylthio group, $R^{P5}$ represents an alkyl group, an aryl group, an alkylthio group, an arylthio group, or an acyl group, and $R^{P6}$ represents an alkyl group or an aryl group. Here, $R^{P1}$ and $R^{P2}$ or $R^{P4}$ and $R^{P5}$ are bonded to each other to form a ring.

Each of $R^{P1}$ and $R^{P2}$ is preferably an alkyl group, an alkoxy group, or an aryloxy group, preferably an alkyl group having 1 to 8 carbon atoms, an alkoxy group having 1 to 8 carbon atoms, and an aryl group having 6 to 10 carbon atoms, still more preferably an alkyl group, and particularly preferably methyl.

As a ring that is formed by bonding $R^{P1}$ and $R^{P2}$ to each other, a 5 or 6-membered ring is preferable. Among these, a cyclopentane ring and a cyclohexane ring are preferable.

$R^{P3}$ is preferably a hydrogen atom, an alkyl group having 1 to 18 carbon atoms, an alkoxy group having 1 to 10 carbon atoms, and an aryl group having 6 to 12 carbon atoms, each of the alkyl group, the alkoxy group, and the aryloxy group may have a substituent, and examples of the substituent include a halogen atom, an alkyl group, an aryl group, an alkoxy group, and a hydroxy group.

As an aryl group, a phenyl group is preferable.

Among these, $R^{P3}$ is preferably a hydrogen atom and an alkyl group having 1 to 4 carbon atoms, and in a case an alkyl group, a hydroxyethyl group is preferable.

1 represents an integer of 0 to 5, an integer of 0 to 3 is preferable, and 0 or 1 is more preferable.

The alkyl group in $R^{P4}$ to $R^{P6}$ is preferably an alkyl group having 1 to 8 carbon atoms, the aryl group in $R^{P4}$ to $R^{P6}$ is preferably an aryl group having 6 to 16 carbon atoms, and the aryl group may have a substituent. Examples of the substituent include a halogen atom, an alkyl group, an aryl group, an alkoxy group, and a hydroxy group.

The alkylthio group or the arylthio group in $R^{P4}$ and $R^{P5}$ is preferably an alkylthio group having 1 to 12 carbon atoms and an arylthio group having 6 to 12 carbon atoms.

The acyl group in $R^{P6}$ is preferably an alkylcarbnyl group or an arylcarbnyl group, and an alkylcarbnyl group having 2 to 12 carbon atoms and an arylcarbnyl group having 7 to 17 carbon atoms are preferable. Among these, $R^{P6}$ is preferably an arylcarbnyl group, and a phenylcarbnyl group that may have a substituent is particularly preferable. The acyl group may have a substituent, and examples of the substituent include a halogen atom, an alkyl group, an aryl group, an alkoxy group, and a hydroxy group.

The polymerization initiator expressed by General Formula (PPI-1) is more preferable to the polymerization

initiator expressed by General Formula (PPI-2).

Hereinafter, specific examples of the polymerization initiator expressed by General Formula (PPI-1) or (PPI-2) are described, but the invention is not limited thereto.

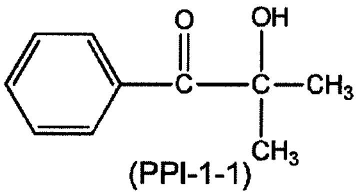

(PPI-1-1)

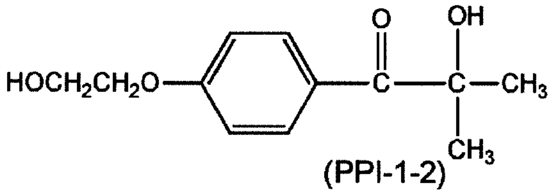

(PPI-1-2)

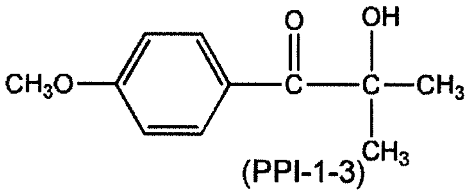

(PPI-1-3)

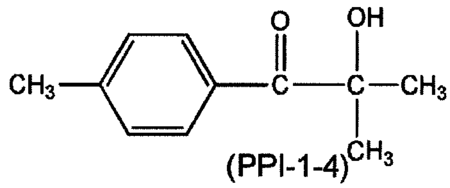

(PPI-1-4)

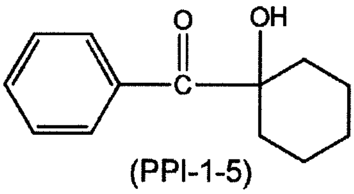

(PPI-1-5)

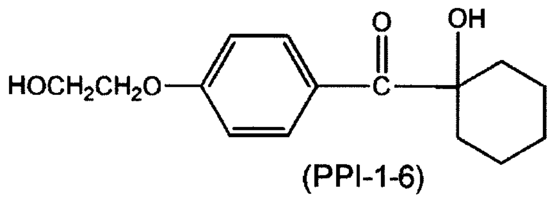

(PPI-1-6)

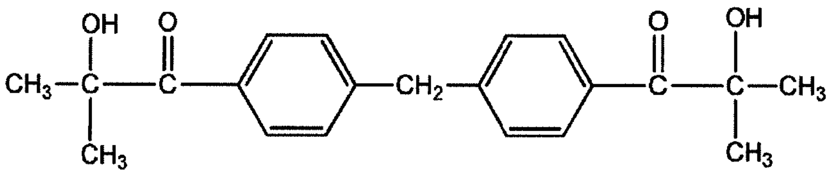

(PPI-1-7)

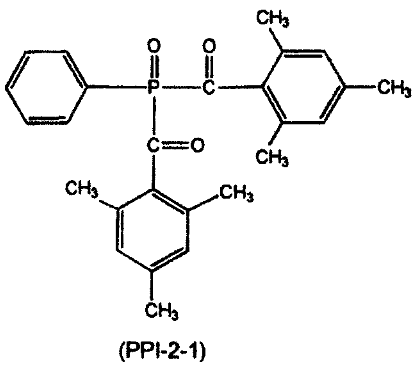

(PPI-2-1)

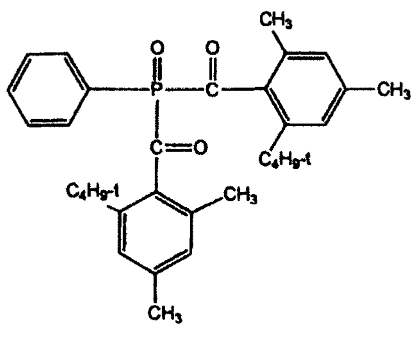

(PPI-2-2)

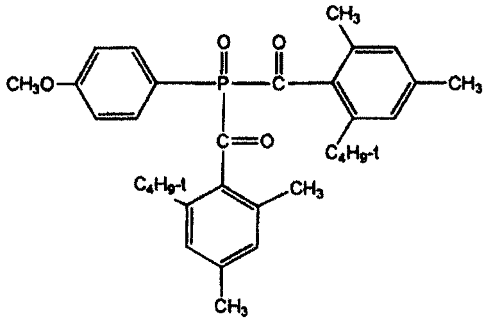

(PPI-2-3)

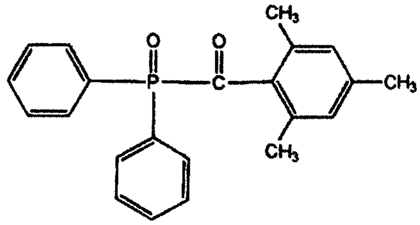

(PPI-2-4)

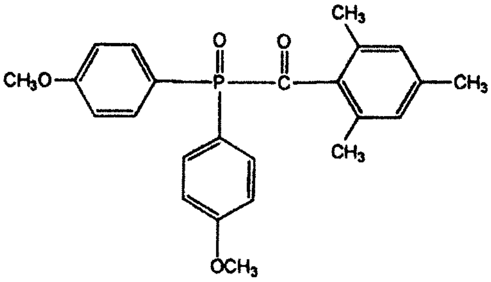

(PPI-2-5)

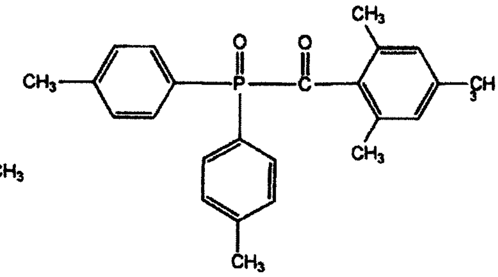

(PPI-2-6)

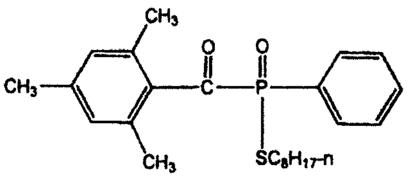

(PPI-2-7)

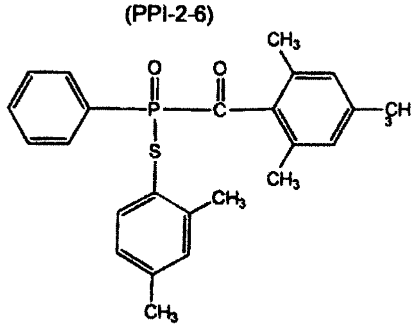

(PPI-2-8)

The polymerization initiators expressed by General Formulae (PPI-1) and (PPI-2) can be obtained from BASF Japan K.K. or the like.

According to the invention, the content of the polymerization initiator expressed by General Formula (PPI-1) or (PPI-2) is preferably 0.1 parts by mass to 20 parts by mass, more preferably 0.1 parts by mass to 10 parts by mass, and particularly preferably 0.5 parts by mass to 5 parts by mass with respect to 100 parts by mass of the total solid content of the resin composition.

According to the invention, it is preferable to contain a radical polymerization initiator expressed by General Formula (AZI) below, that generates radicals by heat or light, together with the polymerization initiator.

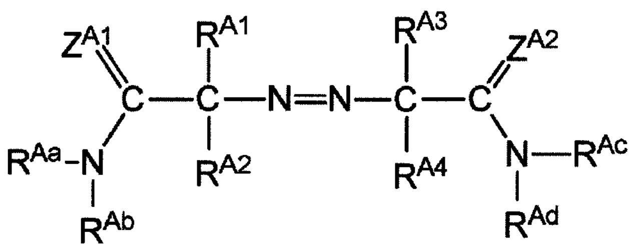

General Formula (AZI)

In General Formula (AZI), each of $Z^{A1}$ and $Z^{A2}$ independently represents =O or =N-$R^{Ae}$. Each of $R^{A1}$ to $R^{A4}$ independently represents an alkyl group. Each of $R^{Aa}$ to $R^{Ae}$ independently represents a hydrogen atom or an alkyl group. At least two of $R^{Aa}$, $R^{Ab}$, and $R^{Ae}$, at least two of $R^{Ac}$, $R^{Ad}$, and $R^{Ae}$, or/and at least two of $R^{Aa}$, $R^{Ae}$, and $R^{Ad}$ are bonded to each other to form rings.

The number of carbon atoms in the alkyl groups in $R^{A1}$ to $R^{A4}$ is preferably 1 to 8 and more preferably 1 to 4, and methyl is particularly preferable.

As $R^{Aa}$ to $R^{Ad}$, a hydrogen atom and an alkyl group having 1 to 8 carbon atoms is preferable.

Rings formed by bonding $R^{Aa}$ and $R^{Ab}$, $R^{Ac}$ and $R^{Ad}$, $R^{Aa}$ and $R^{Ac}$, and $R^{Ab}$ and $R^{Ad}$ to each other are preferably 5 or 6-membered rings.

Among these, the rings formed by bonding $R^{Aa}$ and $R^{Ae}$ and $R^{Ac}$ and $R^{Ac}$ to each other are preferably imidazoline rings. Among these, each of the rings formed by bonding $R^{Aa}$ and $R^{Ab}$ and $R^{Ac}$ and $R^{Ad}$ to each other is preferably a pyrrolidine ring, a piperadine ring, a piperazine ring, a morpholine ring, and a thiomorpholine ring.

$Z^1$ is preferably $=N-R^{Ae}$.

Hereinafter, specific examples of the radical polymerization initiator expressed by General Formula (AZI) are described, but the invention is not limited thereto.

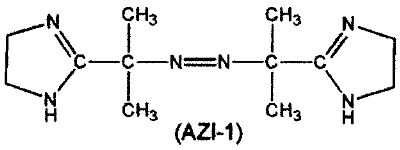
(AZI-1)

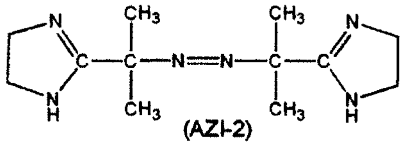
2HCl
(AZI-2)

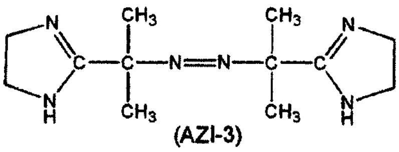
$2H_2SO_4$
$2H_2O$
(AZI-3)

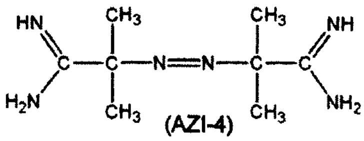
2HCl
(AZI-4)

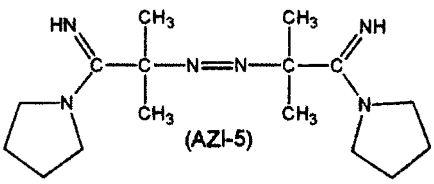
2HCl
(AZI-5)

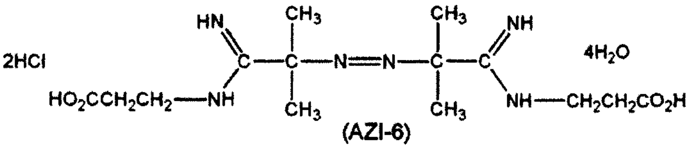
$4H_2O$
(AZI-6)

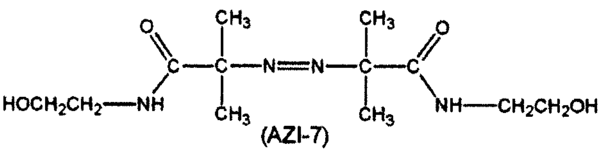
(AZI-7)

The radical polymerization initiator expressed by General Formula (AZI) can be obtained from Wako Pure Chemical Industries, Ltd., and an exemplarycompound (AZI-1) is commercially available as VA-061, an exemplarycompound (AZI-2) is commercially available as VA-044, an exemplarycompound (AZI-3) commercially available as is VA-046B, an exemplarycompound (AZI-4) is commercially available as V-50, an exemplarycompound (AZI-5) is commercially available as VA-067, an exemplarycompound (AZI-6) is commercially available as VA-057, and an exemplarycompound (AZI-7) is commercially available as VA086 (all are product names).

According to the invention, the content of the radical polymerization initiator expressed by General Formula (AZI) is preferably 0.1 parts by mass to 20 parts by mass, more preferably 0.1 parts by mass to 10 parts by mass, and particularly preferably 0.5 parts by mass to 5 parts by mass with respect to 100 parts by mass of the total solid content of the resin composition.

According to the invention, the radical polymerization initiator expressed by General Formula (AZI) above preferably generates radicals by heating, and radical polymerization curing is preferably performed by heating after photo radical polymerization curing reaction.

<(E) Polymerization inhibitor>

The resin composition according to the invention preferably includes a polymerization inhibitor in order to provide stability in a case where the resin composition is used as a coating liquid at the time of forming a membrane.

As the polymerization inhibitor, an arbitrary polymerization inhibitor can be used, and examples thereof include a phenol compound, a hydroquinone compound, an amine compound, and a mercapto compound.

Examples of the phenol compound include hindered phenol (phenol having a t-butyl group in an ortho position, and representative examples include 2,6-di-t-butyl-4-methylphenol), bisphenol. Specific examples of a hydroquinone compound include monomethyl ether hydroquinone. In addition, specific examples of the amine compound include N-nitroso-N-phenylhydroxylamine and N,N-diethylhydroxylamine.

In addition, the polymerization inhibitor may be used singly, or two or more types thereof may be used in combination.

The content of the polymerization inhibitor is preferably 0.01 parts by mass to 5 parts by mass, more preferably 0.01 parts by mass to 1 parts by mass, and still more preferably 0.01 parts by mass to 0.5 parts by mass with respect to 100 parts by mass of the total solid content mass in the resin composition.

<(F) Solvent>

The resin composition according to the invention may contain a solvent.

According to the invention, the content of the solvent in the resin composition is preferably as small as possible, in view of increasing charging density. Therefore, solubility to the reaction solvent for polymerizing and curing becomes important.

According to the invention, the content thereof is preferably 5 parts by mass to 60 parts by mass and more preferably 10 parts by mass to 40 parts by mass with respect to 100 parts by mass of the total resin composition.

If the amount of the solvent is too small, the viscosity of the resin composition increases, and thus an even membrane may not be produced in some cases. In addition, if the amount of the solvent is too much, the content of the solid that is fixed to the support becomes too small, and thus there is a problem in that pinholes (minute defective holes) are easily generated.

As the solvent, a solvent having the degree of solubility with respect to water of 5 mass% or more is preferably used, and a solvent that is freely mixed in water is further preferable. Therefore, the solvent that is selected from water or a water soluble solvent is preferable. As the water soluble solvent, particularly, an alcohol-based solvent, an ether-based solvent, an amide-based solvent, a ketone-based solvent, a sulfoxide-based solvent, a sulfone-based solvent, a nitrile-based solvent, and an organic phosphorus-based solvent which are aprotic polar solvents are preferable. Water and an alcohol-based solvent are preferable, and examples of the alcohol-based solvent include methanol, ethanol, isopropanol, n-butanol, ethylene glycol, propylene glycol, diethylene glycol, and dipropylene glycol. Among the alcohol-based solvents, ethanol, isopropanol, n-butanol, and ethylene glycol are more preferable, and isopropanol is particularly preferable. These be used singly or two or more types thereof may be used in combination. Single use of water or combination use of water and a water soluble solvent is preferable, and single use of water or combination use of water and at least one alcohol-based solvent are more preferable. In the combination use of water and water soluble solvent, the content of the isopropanol is preferably 0.1 mass% to 10 mass%, more preferably 0.5 mass% to 5 mass%, and still more preferably 1.0 mass% to 2.0 mass% with respect to 100 mass% of water.

In addition, with respect to the aprotic polar solvent, dimethyl sulfoxide, dimethyl imidazolidinone, sulfolane, N-methylpyrrolidone, dimethylformamide, acetonitrile, acetone, dioxane, tetramethylurea, hexamethylphosphorotriamide, pyridine, propionitrile, butanone, cyclohexanone, tetrahydrofuran, tetrahydropyran, ethylene glycol diacetate, and γ-butyrolactone are exemplified as a preferable solvent. Among these, dimethyl sulfoxide, N-methylpyrrolidone, dimethylformamide, dimethyl imidazolidinone, sulfolane, acetone or acetonitrile, and tetrahydrofuran are preferable. These can be used singly or two or more types thereof may be used in combination.

<Other components>

The resin composition for forming a membrane according to the invention may include a surfactant, a polymer dispersant, and a crater inhibitor, in addition to the component described above.

[Surfactant]

In order to adjust membrane physical properties, various polymer compounds may be added to the resin composition for forming the membrane according to the invention. As the polymer compound, an acrylic polymer, a polyurethane resin, a polyamide resin, a polyester resin, an epoxy resin, a phenol resin, a polycarbonate resin, a polyvinylbutyral resin, a polyvinylformal resin, shellac, a vinyl-based resin, an acrylic resin, a rubber-based resin, waxes, and other natural resins, and the like can be used. In addition, two or more types of these may be used in combination.

In addition, in order to adjust liquid physical properties, a nonionic surfactant, a cationic surfactant, or an organic fluoro compound, and the like can be added.

Specific examples of the surfactant include an anionic surfactant such as alkylbenzenesulfonic acid salt, alkylnaphthalenesulfonic acid salt, higher fatty acid salt, sulfonic acid salt of higher fatty acid ester, sulfuric acid ester salt of higher alcohol ether, sulfonic acid salt of higher alcohol ether, alkylcarboxylic acid salt of higher alkylsulfonamide, and alkylphosphoric acid salt, an nonionic surfactant such as polyoxyethylene alkyl ether, polyoxyethylene alkylphenyl ether, polyoxyethylene fatty acid ester, sorbitan fatty acid ester, an ethylene oxide adduct of acetylene glycol, an ethylene

oxide adduct of glycerine, and polyoxyethylene sorbitan fatty acid ester. In addition, examples thereof include an amphoteric surfactant such as alkylbetaine or amidobetaine, a silicon-based surfactant, a fluorine-based surfactant, and the like, and the surfactant can be appropriately selected from an arbitrary surfactant or derivatives thereof.

<Polymer dispersant>

The resin composition for forming a membrane according to the invention may include a polymer dispersant.

Specifically, examples of the polymer dispersant include polyvinylpyrrolidone, polyvinylalcohol, polyvinylmethylether, polyethyleneoxide, polyethylene glycol, polypropylene glycol, and polyacrylamide. Among these, polyvinylpyrrolidone is preferably used.

<Crater inhibitor>

A crater inhibitor is called a surface adjusting agent, a leveling agent, or a slipping agent, prevents unevenness of the membrane surface, and examples thereof include compounds in the structure of organic modified polysiloxane (a mixture of polyethersiloxane and polyether), a polyether-modified polysiloxane copolymer, and a silicon-modified copolymer.

Examples of the commercially available products include TEGO GLIDE 432, TEGO GLIDE 110, TEGO GLIDE 110, TEGO GLIDE 130, TEGO GLIDE 406, TEGO GLIDE 410, TEGO GLIDE 411, TEGO GLIDE 415, TEGO GLIDE 420, TEGO GLIDE 435, TEGO GLIDE 440, TEGO GLIDE 450, TEGO GLIDE 482, TEGO GLIDE A115, TEGO GLIDE B1484, and TEGO GLIDE ZG400 (all are product names) manufactured by Evonik industries.

The content of the crater inhibitor is preferably 0 parts by mass to 10 parts by mass, more preferably 0 parts by mass to 5 parts by mass, and still more preferably 1 part by mass to 2 parts by mass with respect to 100 parts by mass of the total solid content mass of the resin composition.

In addition to the above, the resin composition for forming the membrane according to the invention may contain, for example, a viscosity improver or a preservative, if necessary.

<Support>

In order to provide the membrane according to the invention that has a favorable physical strength, a support can be used as a material for reinforcing the membrane, and a porous support is preferably used. A portion of the membrane can be configured by coating and/or impregnating this porous support with the resin composition and performing polymerization curing reaction.

Examples of the porous support as the reinforcing material include woven fabric or nonwoven fabric, a stretched porous film, a spongy film, and a film having fine through holes. Among these, in view of a low modulus of elasticity and mechanical strength as the porous support used in the invention and also comprising easiness of infiltration when being impregnated with the resin composition, nonwoven fabric is preferable. In addition, a fiber diameter is preferably thin as the fiber for forming nonwoven fabric, for the purpose of compatibility between the low modulus of elasticity and the mechanical strength. Specifically, in the fiber for forming the nonwoven fabric, fiber having a fiber diameter of 0.5 μm or greater and less than 5 μm preferably occupies 50% or greater and more preferably occupies 80% or greater. In addition, in the fiber for forming the nonwoven fabric, fiber having a fiber diameter of 1 μm or greater and less than 5 μm preferably occupies 50% or greater and more preferably occupies 80% or greater. In this manner, it is possible to cause in-plane modulus of elasticity in the plane to be evenly arranged by using a porous support mainly formed with thin fiber. Sufficient strength for the porous support can be obtained by causing a fiber diameter to be 0.5 μm or greater.

Further, for the purpose of enhancing the mechanical strength, a diameter of the fiber which occupies 1% or greater and less than 20% of the fiber for forming the nonwoven fabric is preferably 3 μm or greater and less than 20 μm and more preferably 6 μm or greater and less than 15 μm. In this manner, sufficient physical strength can be obtained while modulus of elasticity and in-plane evenness are maintained, by mixing relatively thick fiber in the low frequency.

Here, as a method of configuring nonwoven fabric with fiber having different fiber diameters, nonwoven fabric may be formed by mixing fiber manufactured to have different fiber diameters in advance or nonwoven fabric may be formed to have a width of a fiber diameter when the fiber is formed. Examples of an evaluation method of the fiber diameter include a method of observing a section and/or a surface with a scanning type electron microscope.

The material for forming a porous support according to the invention may be a porous membrane based on, for example, polyamide, polyolefin (polyethylene, polypropylene, and the like), polyacrylonitrile, polyvinyl chloride, polyester, cellulose or acyl derivatives thereof, polysulfone, polyethersulfone, polyphenylene sulfone, polyphenylene sulfide, polyimide, polyetherimide, polyamideimide, polycarbonate, polyacrylate, poly(4-methyl-1-pentene), polyvinylidene fluoride, polytetrafluoroethylene, polyhexafluoropropylene, polychlorotrifluoroethylene, and a copolymer thereof, or a core-sheath composite material. Among these, according to the invention polyamide and polyolefin are preferable, and polyamide is more preferable.

The commercially available porous support and the commercially available reinforcing material are obtained from Tapyrus Co., Ltd., Japanese Vilene Company, Ltd., Freudenberg Filtration Technologies (Novatexx material), and Sefar AG. In an aspect in which the porous reinforcing material is coated with the resin composition before polymerizing and curing, it is preferable that the porous reinforcing material is a material that does not absorb ultraviolet rays having a wavelength that is used in the polymerizing and curing, and/or the resin composition is a composition that can infiltrate the porous reinforcing material such that polymerizing and curing can be performed in the following step (ii).

The porous support is preferably a material having hydrophilicity. As a method of providing hydrophilicity to the support, general methods such as a plasma treatment, a surface grafting treatment, a corona treatment, an ozone treatment, a sulfuric acid treatment, and a silane coupling agent treatment can be used.

<Method for producing ion exchange membrane>

According to the invention, a base membrane of the ion exchange membrane is preferably manufactured through steps: (i) coating the substrate and the support (preferably porous support) with the coating liquid consisting of the resin composition including the respective components according to the invention and (ii) performing polymerization curing reaction on the resin composition by ultraviolet irradiation and, if necessary, performing heating in addition to the ultraviolet irradiation.

In addition, in the step (ii), the heating may be performed together with the ultraviolet irradiation or may be performed before or after the ultraviolet irradiation.

The coating method is not particularly limited, but the porous support layer may be coated, for example, by gravure coating, slot die coating, curtain coating, extrusion coating, air knife coating, slide coating, nip roll coating, forward roll coating, reverse roll coating, dip coating, kiss coating, rod bar coating, or spray coating. In addition, in the coating step, an appropriate amount of the resin composition may be applied. Otherwise, an excessive amount is applied, and an excessive portion may be removed thereafter. The multilayer coating can be performed simultaneously or continuously. The simultaneous multilayer coating is preferably curtain coating, slide coating, slot die coating, and extrusion coating.

In order to provide a fluidity sufficient for performing coating with a high speed coater, the viscosity of the resin composition according to the invention measured at 35°C is, preferably less than 4,000 mPa.s, more preferably 1 mPa.s to 1,000 mPa.s, and particularly preferably 10 mPa.s to 500 mPa.s. In a case of a coating method such as slide bead coating, preferable viscosity measured at 35°C is 1 mPa.s to 100 mPa.s.

If a suitable coating technology is used, the resin composition can be applied to a support that moves at the speed of greater than 15 m/min, for example, greater than 20 m/min, or at a higher speed, such as 60 m/min or 120 m/min. Otherwise, the speed can reach the highest speed of 400 m/min.

<Ultraviolet irradiation>

With respect to the curing caused by the photopolymerization of the resin composition according to the invention, the ultraviolet irradiation starts preferably within 60 seconds, more preferably within 15 seconds, particularly within preferably 5 seconds, and most preferably within 3 seconds, from the coating of the support with the resin composition.

The part coated with the resin composition can be disposed at an upstream position to an irradiation source by photopolymerizing the resin composition according to the invention with ultraviolet irradiation, and thus the irradiation source is disposed at an upstream position to the composite membrane collection part.

The preferable producing method according to the invention is a method performed by a production unit including an irradiation source for continuously polymerizing and curing a resin composition on a moving support and more preferably a resin composition coated part and the resin composition, a membrane collection part, and means for moving the support from the resin composition coated part to the irradiation source and the membrane collection part.

With respect to the wavelength of the ultraviolet rays to be applied, a condition in which an absorbing wavelength of a polymerization initiator that generates radicals by light included in the resin composition and the wavelength are matched to each other is preferable, and examples thereof include UV-A (400 nm to 320 nm), UV-B (320 nm to 280 nm), and UV-C (280 nm to 200 nm).

Preferable ultraviolet ray sources are a mercury arc lamp, a carbon arc lamp, a low pressure mercury lamp, a medium pressure mercury lamp, a high pressure mercury lamp, a swirl flow plasma arc lamp, a metal halide lamp, a xenon lamp, a tungsten lamp, a halogen lamp, a laser, and an ultraviolet light emitting diode. An ultraviolet light emitting lamp in a middle pressure or high pressure mercury vapor type is particularly preferable. In addition, in order to change a light emission spectrum, additives such as metal halide may exist. In most cases, a lamp having maximum light emission in the range of 200 nm to 450 nm is particularly favorable.

The energy output of the irradiation source is preferably 20 W/cm to 1000 W/cm and preferably 40 W/cm to

500 W/cm, but the energy output may be increased or decreased. The exposure strength is one of the parameters that can be used for controlling a cure degree that exerts influence on the final structure of the membrane. The exposure dosage is measured by a High Energy UV Radiometer (UV Power Puck™ manufactured by EIT-Instrument Markets) in the UV-A range indicated in this device. The exposure dosage is preferably at least 40 $mJ/cm^2$ or greater, more preferably 100 $mJ/cm^2$ to 10,000 $mJ/cm^2$, and most preferably 150 $mJ/cm^2$ to 3,000 $mJ/cm^2$. The exposure time can be freely selected, but it is preferable to be short, and typically less than two seconds.

The temperature condition of the polymerization curing reaction for forming the ion exchange membrane is not particularly limited, but the temperature is preferably -30°C to 100°C, more preferably -10°C to 80°C, and particularly preferably 5°C to 70°C.

According to the invention, gas such as air or oxygen may coexist at the time of forming the membrane, but the membrane is preferably formed under the atmosphere of inert gas.

In addition, a considerable amount of heat is possibly generated due to ultraviolet irradiation. Therefore, in order to prevent overheating, air for cooling may be applied to a lamp and/or a support/a membrane. Frequently, IR light in a considerable dosage is applied together with ultraviolet rays. Therefore, it is preferable that the polymerization curing is performed by applying ultraviolet rays filtrated by an IR reflective quartz plate.

With respect to the polymerization curing reaction, ultraviolet irradiation is preferably performed in the condition in which polymerization curing is performed at a speed sufficient for forming the membrane within 30 seconds. If necessary, heating may be performed in addition to the ultraviolet irradiation.

The polymerization curing is achieved by irradiating the resin composition with ultraviolet rays for preferably less than 10 seconds, more preferably less than 5 seconds, particularly preferably less than 3 seconds, and most preferably less than 2 seconds. In the continuous method, the irradiation is continuously performed, the polymerization curing reaction time can be determined depending on a speed at which the resin composition moves to pass through the irradiation source.

In a case where a coating speed is fast, in order to receive irradiation energies required for polymerizing and curing the resin composition, plural ultraviolet lamps may be used. When the plural ultraviolet lamps are used, the settings of the respective lamps may be identical to or different from each other.

<Physical properties of ion exchange membrane>

Aforementioned properties other than the modulus of elasticity of the ion exchange membrane used in the invention are described.

{Ion exchange capacity}

The ion exchange capacity of the ion exchange membrane according to the invention is preferably 1.0 meq/g or greater and 3.5 meq/g or less, more preferably greater than 2.5 meq/g or 3.5 meq/g or less based on the total dry mass of the membrane, an arbitrary porous support and an arbitrary porous reinforcing material that are continuously in contact with the obtainable membrane. If the ion exchange capacity is caused to be 1.0 meq/g or greater and 3.5 meq/g or less, the modulus of elasticity does not decrease nor increase and the ion exchange capacity is also great. Therefore, anion-cation selective permeability is not deteriorated, and the deionization-recycling efficiency does not decrease.

Here, the expression "meq" refers to a milliequivalent, and the expression "meq/g" is also represented by "meq/dry memb."

{membrane resistance}

The membrane resistance (electric resistance) of the ion exchange membrane created by the method for producing the ion exchange membrane according to the invention differs from the ion that permeates the membrane in the practically used environment. However, for example, the membrane resistance (electric resistance) at the time of being used in a 0.5 M sodium chloride aqueous solution is preferably less than 10 $\Omega\cdot cm^2$, more preferably less than 8 $\Omega\cdot cm^2$, and particularly preferably less than 5 $\Omega cm^2$. However, the electric resistance as the ion exchange membrane electrode assembly is less influenced by the membrane resistance, and thus low membrane resistance is not necessarily preferable.

The selective permeability of $Na^+$ to $Cl^-$ of the cation exchange membrane created by the method for producing the ion exchange membrane according to the invention is preferably greater than 0.8, more preferably greater than 0.85, still more preferably greater than 0.9, and particularly preferably greater than 0.95. As the selective permeability comes closer to 1 which is an ideal value, the selective permeability is more preferable.

Meanwhile, the selective permeability of $Cl^-$ to $Na^+$ of the anion exchange membrane created by the method

for producing ion exchange membrane according to the invention is preferably greater than 0.75, more preferably greater than 0.8, still more preferably greater than 0.85, and particularly preferably greater than 0.9. As the selective permeability comes closer to 1 which is an ideal value, the selective permeability is more preferable.

The membrane resistance, the selective permeability, and the swelling ratio % in water can be measured by the method disclosed in Membrane Science, 319, 217 and 218 (2008), edited by Nakagaki Masayuki, Experimental Methods in Membranology, Kitamishobo, pages 193 to 195 (1984).

{Water content}

The water content of the ion exchange membrane according to the invention is preferably in the range of 20 mass% to 50 mass% and more preferably 25 mass% to 45 mass%.

The water content (%) according to the invention is calculated by the following expression.

{(Mass of membrane after being immersed in 0.5 M salt water one night)-(Mass of membrane after membrane is dried until mass does not change)}/(Mass of membrane after membrane is dried until mass does not change) × 100.

{Swelling ratio}

The swelling ratio of the ion exchange membrane created by the method for producing the ion exchange membrane according to the invention in water is preferably less than 30%, more preferably less than 15%, and particularly preferably less than 8%. The swelling ratio can be controlled by selecting an appropriate parameter in a polymerization curing step.

«Method for producing ion exchange membrane electrode assembly»

Hereinafter, the method for producing the ion exchange membrane electrode assembly according to the invention is described.

According to the invention, in a step of joining the ion exchange membrane produced as above or an ion exchange membrane (preferably, a composite membrane of nonwoven fabric and an ion exchange membrane) having a support, to the electrode above or to the electrode in which an adsorbent is provided on a conductor, joining is performed such that air or gas is not included in a portion between the ion exchange membrane and the electrode or the adsorbent.

Here, the gas is gas that is generated from produced ion exchange membrane or the electrode and the adsorbent on the electrode, in addition to the air.

In this pressure-joining, the mixture of the air or gas can be prevented by immersing and extracting the electrode and/or the ion exchange membrane in water or an aqueous solution of a salt, specifically, in an NaCl aqueous solution of 0.1 mM to 100 mM, joining and pressing the electrode and/or the ion exchange membrane in a state in which excessive water or an aqueous solution exists on the surface in a massive amount, such that the excessive water or the excessive aqueous solution is squeezed out. Otherwise, it is possible to achieve performing the joining step and/or the pressure-joining step in water or an aqueous solution.

Particularly, it is preferable to perform pressurization after suction deaerating is performed before the pressurization.

In addition, the temperature of the pressure-joining is preferably 0°C to 60°C.

«Capacitor deionization device»

The anion exchange membrane electrode assembly according to the invention and the cation exchange membrane electrode assembly are caused to face each other and a flow path is formed between the surface on the opposite side of the surface that is in contact with the electrode of the anion exchange membrane and the electrode on the opposite side of the surface that is in contact with the electrode of the cation exchange membrane, so as to form a deionization capacitor.

Hereinafter, with reference to Fig. 1, deionization using the deionization capacitor according to the invention and recycling of the anion exchange membrane electrode assembly and the cation exchange membrane electrode assembly are described.

In Figs. 1A and 1B, Fig. 1A represents changes of a voltage that is applied to the deionization capacitor with time. Meanwhile, Fig. 1B represents movements of ions in the deionization capacitor corresponding to the changes of

the voltage with time.

In Fig. 1B, 1a, 1b, 1c, and 1d represent deionization capacitors using the ion exchange membrane electrode assemblies.

2 represents a conductor, and 3 represents an ion absorbent. In a case where an ion absorbent is used with the material different from the conductor, 2 and 3 become electrodes. In a case where the conductor also functions as the ion absorbent, an ion absorbent is not separately used, and an electrode is formed only with 2. Here, materials of the conductor are the materials exemplified in the electrode above. Meanwhile, examples of the material of the ion absorbent include the materials described above. 4 represents an anion exchange membrane, 5 represents a cation exchange membrane, and 6 represents a flow direction of the feed solution of tap water or the like. Ions in the feed solution are not particularly limited. In Fig. 1B, an chloride ion ($Cl^-$) is exemplified as an example of an anion, and a sodium ion ($Na^+$) is exemplified as an example of a cation.

For the convenience of drawing figures, in the anion exchange membrane electrode assembly formed with the conductor of 2, the ion absorbent of 3, and the anion exchange membrane of 4, it looks like there are spaces between the conductor of 2, the ion absorbent of 3, and the anion exchange membrane of 4, but in the real invention, they are closely in contact with each other. The cation exchange membrane electrode assembly formed with the conductor of 2, the ion absorbent of 3, and the cation exchange membrane of 5 is the same.

In addition, though not illustrated in the drawings, the electrical circuit is formed in order to apply a voltage at the time of deionization or recycling.

In Fig. 1B, the deionization capacitor of 1a and the deionization capacitor of 1b are illustrated in a state of performing deionization. In 1a and 1b, a voltage is applied such that the anion exchange membrane electrode assembly side becomes a high potential, and the cation exchange membrane electrode assembly side becomes a low potential. Though not illustrated in the drawings, pressure is applied such that the feed solution by a pump flows in the direction indicated by an arrow of 6. As illustrated in 1a and 1b, the chloride ions in the feed solution are selectively adsorbed in the ion absorbent on the anion exchange membrane electrode assembly side which is the positive electrode. Meanwhile, the sodium ions in the feed solution are selectively adsorbed in the ion absorbent on the cation exchange membrane electrode assembly side which is the negative electrode. This is a deionization process.

In Fig. 1b, the deionization capacitor of 1c and the deionization capacitor of 1d are illustrated in the state in which recycling is continuously performed subsequent to the deionization. As illustrated in Fig. 1A, an application of the voltage is changed such that the voltage on the anion exchange membrane electrode assembly side becomes a low potential and the voltage on the cation exchange membrane electrode assembly side becomes a high potential. In this manner, the chloride ions are desorbed from the ion absorbent on the anion exchange membrane electrode assembly side which is the negative electrode and return to the feed solution. Meanwhile, the sodium ions are desorbed from the ion absorbent on the cation exchange membrane electrode assembly side which is the positive electrode and return to the feed solution. This is the recycling process.

In Fig. 1B, for example, deionized water can be obtained while the tap water is used as the feed solution and the voltage is continuously applied, such that the anion exchange membrane electrode assembly side becomes the high potential, and the cation exchange membrane electrode assembly side becomes the low potential. In contrast, the ion exchange membrane electrode assembly is recycled, while tap water is used as the feed solution and the voltage is continuously applied such that the anion exchange membrane electrode assembly side becomes a low potential and the cation exchange membrane electrode assembly side becomes a high potential.

The method for controlling the circuit may be the electric current control method for performing control such that a regulated electric current flows or may be the voltage control method for performing control such that a regulated voltage is applied. In addition, in the case of the electric current control method, the direction and the size of the voltage is appropriately controlled in the direction of flowing the electric current.

In addition, according to the invention, the sectional shape of the flow path is preferably rectangular, the thickness is preferably 1 $\mu$m to 1 mm and more preferably 50 $\mu$m to 300 $\mu$m. In addition, the flow path length of 1 cm to 50 cm is preferable and efficient.

In addition, in the invention, the ion exchange membrane electrode assembly according to the invention can be preferably applied to capacitor deionization devices disclosed in paragraph "0020" of JP2010-517746A, paragraphs "0023" to "0027" of JP2012-506767A, paragraph "0011" of JP2013-500157A, paragraph "0026" of JP2013-063364A, and paragraph "0013" of JP2001-070947A.

## Examples

Hereinafter, the invention is described in detail with reference to the examples, but the invention is not limited thereto. In addition, unless described otherwise, "parts" and "%" are based on mass.

(Example 1)

(Preparing of coating liquid for forming anion exchange membrane)

17.1 parts by mass of pure water, 0.05 parts by mass of 4-methoxyphenol (manufactured by Tokyo Chemical Industry Co., Ltd.), 22.9 parts by mass of a 75% aqueous solution of dimethylamino propylacrylamide, methyl chloride quaternary (DMAPAA-Q) (solid content: 17.2 parts by mass, water: 5.7 parts by mass, manufactured by Kohjin Co., Ltd.), 17.2 parts by mass of N, N-dimethyl acrylamide (DMAA, manufactured by Tokyo Chemical Industry Co., Ltd.), 19.9 parts by mass of lithium nitrate (manufactured by Wako Pure Chemical Industries, Ltd.) were mixed at 65°C, and 8.4 parts by mass of isopropylalcohol (manufactured by Tokyo Chemical Industry Co., Ltd.), 2.6 parts by mass of methylenebisacrylamide (MBA, manufactured by Tokyo Chemical Industry Co., Ltd.), 10.4 parts by mass of tetraethylene glycol diacrylate (TEDA, manufactured by Tokyo Chemical Industry Co., Ltd.), 0.5 parts by mass of DAROCUR 1173 (Product name, manufactured by BASF SE), and 1 parts by mass of TEGO GLIDE 432 (Product name, manufactured by Evonik Japan Co., Ltd.) were mixed to this and dissolved and dispersed at 45°C.

(Preparing of coating liquid for forming cation exchange membrane)

12.5 parts by mass of pure water, 0.5 parts by mass of GENORAD 16 (Product name, manufactured by Rahn AG), 8.5 parts by mass of lithium hydroxide monohydrate (manufactured by Wako Pure Chemical Industries, Ltd.), 21.4 parts by mass of 2-acrylamido-2-methylpropane sulfonic acid (AMPS, manufactured by Tokyo Chemical Industry Co., Ltd.), 21.4 parts by mass of N,N-dimethyl acrylamide (DMAA, manufactured by Tokyo Chemical Industry Co., Ltd.) were mixed and dissolved at 65°C, and 18.1 parts by mass of isopropylalcohol (manufactured by Tokyo Chemical Industry Co., Ltd.), 3.2 parts by mass of methylenebisacrylamide (manufactured by Tokyo Chemical Industry Co., Ltd.), 12.9 parts by mass of tetraethylene glycol diacrylate (TEDA, manufactured by Tokyo Chemical Industry Co., Ltd.), 0.5 parts by mass of DAROCUR 1173 (Product name, manufactured by BASF SE), and 1 parts by mass of TEGO GLIDE 432 (Product name, manufactured by Evonik Japan Co., Ltd.) were mixed to this and dissolved or dispersed at 45°C.

(Creating of anion exchange membrane)

An aluminum plate was manually coated with the coating liquid of the resin composition in the composition above at a speed of about 5 m/min by using a wire bar (a stainless rod around which a wire of 150 $\mu$m was wound by 1 cycle/3 cm (longitudinal direction)), and subsequently nonwoven fabric (polyamide nonwoven fabric N1 having a thickness of 76 $\mu$m manufactured by Tapyrus Co., Ltd.) was impregnated in a coating liquid. Subsequently, the coating liquid was removed within one minute by using a rod around which a wire was not wound. The temperature of the coating liquid at the time of coating was about 50°C. Polymerization curing reaction was performed on the support impregnated with the coating liquid by using a UV exposure machine (manufactured by Fusion UV Systems, Type Light Hammer LH6, D-valve, speed: 3.5 m/min, 100% strength), so as to prepare an anion exchange membrane. The exposure time was about 2 seconds. The obtained membrane was removed from the aluminum plate and the aluminum plate was preserved for 12 hours in the 0.1M NaCl solution.

(Creating of cation exchange membrane)

A cation exchange membrane was created in the same manner as in the creating of the anion exchange membrane except for using the coating liquid for forming the cation exchange membrane instead of the coating liquid for forming the anion exchange membrane.

(Examples 2 to 9 and Comparative Examples 1 and 2)

In the creating of the anion exchange membrane and the cation exchange membrane of Example 1, anion exchange membranes, cation exchange membranes of Examples 2 to 9 and Comparative Examples 1 and 2 were created in the same manner as in Example 1 except for respectively changing resins and supports to have compositions presented in Table 1 below.

(Comparative Example 3)

AMX (Product name, manufactured by ASTOM Corporation) was used as the anion exchange membrane and CMX (Product name, manufactured by ASTOM Corporation) was used as the cation exchange membrane.

[Ion exchange capacity (meq/g)]

In the method for measuring the ion exchange capacity, after the anion exchange membrane was immersed in a 2 M sodium chloride aqueous solution and washed with water, the membrane was immersed in a 2 M sodium nitrate aqueous solution three times, and an amount of chloride ions extracted from the membrane was measured with potassium chromate. After the cation exchange membrane was immersed in a 1 M hydrochloric acid aqueous solution and washed with water, the membrane was immersed in a 2 M sodium chloride aqueous solution three times, the concentrations of the chloride ions in the washing liquid and the immersion liquid after washing with water were measured with 0.1 M sodium hydroxide. Specifically, this method was followed by the method disclosed in page 194 of the ion exchange membrane experimental method in Section 14 of "Experimental Methods in Membranology (issued in 1984, edited by Nakagaki Masayuki, Kitamishobo)".

The ion exchange capacity of 2.5 meq/g or greater was denoted as "high", and the ion exchange capacity of less than 2.5 meq/g was denoted as "low". Results are presented in Table 1.

[Fiber diameter (μm)]

After the support was washed with pure water, the support was dried in room temperature, under 0.1 atmospheric pressure, for 1 hour or longer. A dry sample was attached to a metal stage with a conductive carbon tape, gold sputtering was performed for two minutes with a sputter device (manufactured by Vacuum Device Inc., Model number: MSP-1S), to manufacture a gold coated sample. The gold coated sample was observed with a scanning type electron microscope (manufactured by Keyence Corporation, Model Number: VE-7800) at the acceleration voltage of 10 kV and in magnification of 1,000 times so as to measure a fiber diameter.

Results are presented in Table 1.

[Modulus of elasticity (MPa)]

The ion exchange membrane was washed with water and cut into a belt shape of 15 mm ×·90 mm, to measure the thickness. The ion exchange membrane was pinched in a wet state with a tensile testing machine (manufactured by Shimadzu Corporation, Product name: AUTOGRAPH AGS-J) in a distance between the fixing tools of 60 mm and the tension was measured when the ion exchange membrane was pulled under the environment of 80%RH at 25°C at a constant speed of 6 mm/min. The modulus of elasticity was calculated from a straight line of the stress (tension/initial cross-sectional area) to the strain while the ion exchange membrane was initially extended by 1 mm.

[Table 1]

Table 1

| | Anion exchange membrane (AEM) | | | | |
|---|---|---|---|---|---|
| | Resin | IEC[Note1)] | Support | Fiber diameter | Modulus of elasticity |
| | | | | μm | MPa |
| Example 1 | A-5T8 | Low | TR | 2 μm +7 μm | 16.6 |
| Example 2 | A-5T5 | Low | | | 24.6 |
| Example 3 | A-0T5 | High | | | 26.3 |
| Example 4 | A-0T0 | High | | | 41.5 |
| Example 5 | A-5D8 | Low | | | 25.1 |
| Example 6 | A-5T8 | Low | J7 | 2 μm +8 μm | 32.3 |
| Example 7 | A-5T8 | Low | Ap | Not nonwoven fabric | 14.0 |
| Example 8 | A-5T8 | Low | U1 | 4.5 μm +20 μm | 45.2 |
| Example 9 | A-0T8 | High | TR | 2 μm +7 μm | 16.1 |
| Comparative Example 1 | A-5T8 | Low | F2 | 12 μm | 132 |
| Comparative Example 2 | A-5T8 Air[Note 2)] | Low | F2 | 12 μm | 132 |
| Comparative Example 3 | Commercially available product AMX | | | | 150 or greater |

[Table 2]

| Continued from Table 1 | | | | | |
|---|---|---|---|---|---|
| | Cation exchange membrane (CEM) | | | | |
| | Resin | IEC Note 1) | Support | Fiber diameter | Modulus of elasticity |
| | | | | μm Note3) | MPa |
| Example 1 | C-5T8 | Low | TR | 2 μm +7 μm | 18.1 |
| Example 2 | C-5T5 | Low | | | 28.1 |
| Example 3 | C-0T5 | High | | | 23.1 |
| Example 4 | C-0T0 | High | | | 39.3 |
| Example 5 | C-5D8 | Low | | | 28.2 |
| Example 6 | C-5T8 | Low | J7 | 2 μm +8 μm | 33.4 |
| Example 7 | C-5T8 | Low | Ap | Not nonwoven fabric | 16.1 |
| Example 8 | C-5T8 | Low | U1 | 4.5 μm +20 μm | 45.3 |
| Example 9 | C-0T8 | High | TR | 2 μm +7 μm | 18.0 |
| Comparative Example 1 | C-5T8 | Low | F2 | 12 μm | 133 |
| Comparative Example 2 | A-5T8 Air Note 2) | Low | F2 | 12 μm | 133 |
| Comparative Example 3 | Commercially available product CMX | | | | Greater than 150 or greater |

Description of notes in Table 1

Note 1) Ion exchange capacity (meq/g)
Note 2) "Air" means an assembly including air or gas between an electrode and an ion exchange membrane.
Note 3) In a case where description is made in two stages, a value in the upper stage represents a diameter of the fiber of the main component that occupies 50% or greater of the entire body by volume. A value in the lower stage represents a diameter of the fiber of the sub component that occupies less than 50% of the entire body by volume.

Here, abbreviations in Table 1 are the same as in Table 2.

[Table 3]

Table 2 (Resin)

| AEM-based | DMAPAAQ | DMAA | MBA | TEDA | DEDMA |
|---|---|---|---|---|---|
| | Total: 34.4 parts by mass (Solid content) | | Total: 13.0 parts by mass | | |
| A-5T8 | 17.2 parts | 17.2 parts | 2.6 parts | 10.4 parts | - |
| A-5T5 | 17.2 parts | 17.2 parts | 6.5 parts | 6.5 parts | - |
| A-OT5 | 34.4 parts | - | 6.5 parts | 6.5 parts | - |
| A-0T0 | 34.4 parts | - | 13.0 parts | - | - |
| A-5D8 | 17.2 parts | 17.2 parts | 2.6 parts | - | 10.4 parts |
| A-0T8 | 34.4 parts | - | 2.6 parts | 10.4 parts | - |

[Table 4]

| Continued from Table 2 (Resin) | | | | | |
|---|---|---|---|---|---|
| CEM-based | AMPS | DMAA | MBA | TEDA | DEDMA |
| | Total: 42.8 parts by mass | | Total: 16.1 parts by mass to 16.2 parts by mass | | |
| C-5T8 | 21.4 parts | 21.4 parts | 3.2 parts | 12.9 parts | - |
| C-5T5 | 21.4 parts | 21.4 parts | 8.6 parts | 8.6 parts | - |
| C-0T5 | 42.8 parts | - | 8.6 parts | 8.6 parts | - |
| C-0T0 | 42.8 parts | - | 16.1 parts | - | - |
| C-5D8 | 21.4 parts | 21.4 parts | 3.2 parts | - | 12.9 parts |
| C-0T8 | 42.8 parts | - | 3.2 parts | 12.9 parts | - |

Description of abbreviations in Table 2

DMAPAAQ: N,N-dimethylamino propylacrylamide, methyl chloride quaternary
AMPS: 2-Acrylamido-2-methylpropane sulfonic acid
DMAA: N,N-dimethyl acrylamide
MBA: Methylenebisacrylamide
TEDA: Tetraethylene glycol diacrylatez
DEDMA: Diethylene glycol methacrylate (manufactured by Tokyo Chemical Industry Co., Ltd.)

·Support

TR: N1 (thickness: 76 μm, basis weight: 19 g/m$^2$, manufactured by Tapyrus Co., Ltd.)
J7: FF1855-1 (thickness: 55 μm, basis weight: 18 g/m$^2$, manufactured by Japanese Vilene Company, Ltd.)
Ap: H6A (thickness: 35 μm, basis weight: 13 g/m$^2$, manufactured by APLUS Co., Ltd.)
U1: UNQ-04-Q(thickness: 70 μm, basis weight: 18 g/m$^2$, manufactured by Ube Exsymo Co., Ltd.)
F2:2223-10C (thickness: 100 μm, basis weight: 30 g/m$^2$, manufactured by NOK Corporation)

[Table 5]

Table 3 (Support)

| Support | Material | Ratio of fibers having fiber diameter of less than 5 μm | Ratio of fibers having fiber diameter of 5 μm or greater | Support manufacturing method |
|---|---|---|---|---|
| TR | Polyamide | 90% | 10% | Nonwoven fabric |
| J7 | Polypropylene (core) /polyethylene (sheath) | 90% | 10% | Nonwoven fabric |
| Ap | Polyethylene | - | - | Stretched film |
| U1 | Polypropylene (core) /polyethylene (sheath) | 20% | 80% | Nonwoven fabric |
| F2 | Polypropylene (core) /polyethylene (sheath) | 0% | 100% | Nonwoven fabric |

Comparative ion exchange membrane

AMX: Commercially available anion exchange membrane (component: polystyrene-based, thickness: 140 μm, manufactured by ASTOM Corporation)

CMX: Commercially available cation exchange membrane (component: polystyrene-based, thickness: 180 μm, manufactured by ASTOM Corporation)

· Electrode

A graphite sheet of 0.254 mm (manufactured by GrafTech International, Product name: Grafoil) was prepared, the graphite sheet was coated with an activated carbon paste (manufactured by Hitachi Chemical Co., Ltd., Product name: HITASOL GA-1000) as the ion absorbent such that a dry membrane thickness become 70 μm, the activated carbon paste was dried, the resultant was pressed with a roller and absolutely dried over three hours at 150°C in 0.1 atmospheric pressure. Before the use, the electrode was immersed for three hours or more in 0.1 M sodium chloride to be used. In addition, the electrode was used in the direction in which the surface coated with activated carbon came into contact with treatment liquid.

·Flow path

A silicone sheet having a thickness of 0.5 mm (manufactured by Fuso Rubber Co., Ltd., hardness: 90°) was hollowed such that a liquid transferring portion had a serpiginous shape.

·Treatment liquid

A mixed aqueous solution was prepared in which respective salts were dissolved in pure water such that magnesium sulfate become 0.5 mM ($MgSO_4$, manufactured by Wako Pure Chemical Industries, Ltd.), calcium chloride become 1 mM ($CaCl_2$, manufactured by Wako Pure Chemical Industries, Ltd.), and sodium hydrogen carbonate become 1 mM ($NaHCO_3$, manufactured by Wako Pure Chemical Industries, Ltd.), so as to form a treatment liquid.

(Example 1C)

A capacitor deionization device was created by using the anion exchange membrane and the cation exchange membrane created in Example 1.

A cell lower part (foundation), the electrode (i), the cation exchange membrane, the flow path, the anion exchange membrane, the electrode (ii), and a cell upper part (lid) were laminated in this sequence from the bottom and were fastened with hexagon head bolts so as to form a capacitor deionization device. At this point, respective membranes and respective electrodes were immersed in the 0.1 M sodium chloride aqueous solution such that air layer or a gas layer was not formed between the electrode and the cation exchange membrane and between the electrode and the anion exchange membrane, and the respective layers are overlapped with the liquid interposed therebetween and tightly fastened with hexagon head bolts together with removing the liquid, to form the capacitor deionization device. At this point, the hexagon head bolts were forcefully pushed by 5 cN·m with a torque wrench. A flow path opening of this capacitor deionization cell was connected to a peristaltic pump, a tip thereof is connected to a container filled with the treatment liquid, a flow path outlet of the cell was connected to a circulation-type electrical conductivity meter (manufactured by HORIBA, Ltd., a conductivity cell for column chromatography using a very small amount 3574-10C). Two electrodes were connected to a galvanostat (manufactured by Bio-Logic-Science Instruments, Model number: VSP-3000).

(Examples 2C to 9C and Comparative Examples 1C to 3C)

In, capacitor deionization devices were created in the same manner as Example 1C except for changing the anion exchange membrane and the cation exchange membrane in Example 1C to anion exchange membranes and cation exchange membranes of Examples 2 to 9 and Comparative Examples 1 to 3.

[Membrane electrode assembly (MEA) voltage (V)]

A membrane electrode assembly voltage was measured in a state in which the treatment liquid flowed in the flow path at the speed of 20 ml/min. In a direction in which the potential on the anion exchange membrane side increases, a voltage was applied for 30 seconds such that the electric current density between two electrodes became 5 $A/m^2$ (deionization), and subsequently a voltage was applied for 30 seconds such that electricity flowed in the electric current density of 5 $A/m^2$ in an opposite direction (recycling). This cycle was repeated by 100 cycles, and the voltage value at the last timing when the voltage was applied at the 100-th recycling was set to be the MEA voltage (V). In addition, if a case where the potential of the electrode on the anion exchange membrane side was high was set to positive (+), the

MEA voltage became negative, but the MEA voltage was indicated as an absolute value. The results are presented in Table 4.

In addition, the evaluation ranks in Table 4 follow the following standards.

A: Less than 0.7 V
B: 0.7 V or greater and less than 0.75 V
C: 0.75 V or greater and less than 0.8 V
D: 0.8 V or greater and less than 0.85 V
E: 0.85 V or greater

[Deionization recycling]

In the process for measuring the MEA voltage, a case where the conductivity of the treatment liquid after 10 seconds from the start of the deionization on the 100-th cycle decreased by 5% or more than the conductivity before the treatment, and the conductivity of the treatment liquid after 10 seconds from the start of the recycling increased by 5% or more than the conductivity before the treatment was evaluated as "good", and a case where the conductivity merely changed by less than 5% in both of the deionization and the recycling was evaluated as "normal".

The results are presented in Table 4.

[Membrane resistance ($\Omega \cdot cm^2$)]

The ion exchange membrane to be measured was cut into 20 mm × 20 mm and immersed in the 0.5 M sodium chloride aqueous solution in advance. The membrane was pinched between two silicone sheets (1 mm) hollowed in a circular shape (1 $cm^2$), platinum wires (having a diameter of 0.1 mm) was disposed at the center position on the outside thereof, and further pinched between two silicone sheets in the same shape. Further, a container filled with the 0.5 M sodium chloride aqueous solution was connected to both sides thereof, and two platinum plates were disposed on the outside thereof, as reference electrodes. Two lines of the platinum wires and two sheets of the platinum plates were respectively connected to a frequency characteristic analyzer (manufactured by Bio-Logic-Science Instruments, Model Number: VSP-3000), resistance between platinum wires was measured from an electric current value when an alternative voltage was applied in the conditions of an amplitude of 5 mV, a frequency of 1 kHz, and waiting time in a cumulative number of 5 times of 0.3 seconds, and the membrane resistance was measured according to the difference from resistance when the resistance was measured in the same manner except for not providing the membrane.

The results are presented in Table 4.

[Table 6]

Table 4

| | Evaluation | | | |
|---|---|---|---|---|
| | MEA voltage | | Deionization recycle | Membrane resistance (Anion exchange membrane+ cation exchange membrane) |
| | Evaluation rank | V | | $\Omega \cdot cm^2$ |
| Example 1C | A | 0.69 | Good | 2.16 |
| Example 2C | B | 0.72 | Good | 2.74 |
| Example 3C | B | 0.72 | Good | 1.54 |
| Example 4C | C | 0.76 | Good | 1.66 |
| Example 5C | B | 0.71 | Good | 2.50 |
| Example 6C | B | 0.74 | Good | 2.10 |
| Example 7C | B | 0.71 | Normal | 1.15 |
| Example 8C | C | 0.77 | Normal | 2.05 |
| Example 9C | B | 0.74 | Normal | 1.30 |
| Comparative Example 1C | E | 0.87 | Good | 3.32 |

(continued)

| | Evaluation | | | |
|---|---|---|---|---|
| | MEA voltage | | Deionization recycle | Membrane resistance (Anion exchange membrane+ cation exchange membrane) |
| | Evaluation rank | V | | $\Omega\cdot cm^2$ |
| Comparative Example 2C | E | 0.98 | Good | 3.32 |
| Comparative Example 3C | E | 0.88 | Good | 6.45 |

As clearly seen from Table 4 above, in the capacitor deionization device manufactured by using the anion exchange membrane and the cation exchange membrane of which modulus of elasticity is 50 MPa or less, the MEA voltage was low, and deionization recycling was appropriately performed.

In addition, the MEA voltage of the capacitor deionization device manufactured by using the anion exchange membrane and the cation exchange membrane of which the modulus of elasticity was 35 MPa or less was lower than the MEA voltage of the capacitor deionization device manufactured by using the anion exchange membrane and the cation exchange membrane of which the modulus of elasticity was greater than 35 MPa or 50 MPa or less.

Further, the capacitor deionization devices of Examples 1C to 9C that did not have air/gas layers between the ion exchange membranes and the electrodes had MEA voltages remarkably lower than that of the capacitor deionization device of Comparative Example 3C that had an air/gas layer.

As seen in the comparison between Example 1 and Example 3, the MEA voltage did not necessarily depend on the membrane resistance. It had been found that, even in a case where the membrane resistance was high, if an ion exchange membrane having a low modulus of elasticity is used, the MEA voltage was able to be decreased.

The invention has been described together with the embodiments thereof. Unless described otherwise, all details of the description are not intended to limit the invention, and it is obvious that the invention is widely construed without departing from the idea and the scope of the invention described in the claims.

This application is based upon and claims the benefit of priority based on JP2013-231050, filed on November 7, 2013 filed in Japan, and the entire contents of all of which are incorporated herein by reference as a part of the description of this application.

Explanation of References

1a, 1b, 1c, 1d: deionization capacitor
2: conductor
3: ion absorbent
4: anion exchange membrane
5: cation exchange membrane
6: progressing direction of feed solution

## Claims

**1.** An ion exchange membrane electrode assembly, comprising:

an ion exchange membrane which is on an electrode, is made of an ion exchange resin, and has a modulus of elasticity of 50 MPa or less.

**2.** The ion exchange membrane electrode assembly according to claim 1,

wherein the modulus of elasticity is 35 MPa or less.

**3.** The ion exchange membrane electrode assembly according to claim 1 or 2, further comprising:

an ion absorbent between the electrode and the ion exchange membrane.

**4.** The ion exchange membrane electrode assembly according to any one of claims 1 to 3,

wherein air or gas is not included between the electrode and the ion exchange membrane.

**5.** The ion exchange membrane electrode assembly according to any one of claims 1 to 4,

wherein the ion exchange membrane electrode assembly is used in order to adsorb or desorb ions in a flow path.

**6.** The ion exchange membrane electrode assembly according to any one of claims 1 to 5,

wherein the ion exchange membrane electrode assembly is for capacitor deionization.

**7.** The ion exchange membrane electrode assembly according to any one of claims 1 to 6,

wherein the ion exchange membrane is a composite membrane of nonwoven fabric and a ion exchange resin.

**8.** The ion exchange membrane electrode assembly according to claim 7,

wherein a diameter of 50% or more of fibers in the nonwoven fabric is less than 5 μm.

**9.** The ion exchange membrane electrode assembly according to claim 7,

wherein a diameter of 1% or greater and less than 20% of the fibers in the nonwoven fabric is 5 μm or greater.

**10.** The ion exchange membrane electrode assembly according to any one of claims 1 to 9,

wherein ion exchange capacity of the ion exchange membrane is 2.5 meq/g or less.

**11.** The ion exchange membrane electrode assembly according to any one of claims 1 to 10,

wherein the ion exchange resin is a resin including a (meth)acryl component.

**12.** The ion exchange membrane electrode assembly according to claim 11,

wherein the (meth)acryl component is (meth)acrylamide or (meth)acrylester.

**13.** The ion exchange membrane electrode assembly according to any one of claims 1 to 10,

wherein the electrode is a positive electrode, and
the ion exchange membrane is an anion exchange membrane.

**14.** A method for producing the ion exchange membrane electrode assembly according to any one of claims 1 to 13, comprising:

joining the ion exchange membrane and the electrode such that air or gas is not included therebetween.

**15.** The method for producing the ion exchange membrane electrode assembly according to claim 14,

wherein the joining is pressure-joining.

**16.** A capacitor deionization device comprising:

two pairs of ion exchange membrane electrode assemblies that have ion exchange membranes consisting of an ion exchange resin, on the electrode; and
a flow path that is in contact with the respective two pairs of the ion exchange membranes,

wherein a modulus of elasticity of at least one of the ion exchange membrane is 50 MPa or less.

**17.** The capacitor deionization device according to claim 16,

wherein a modulus of elasticity of each of the ion exchange membranes is 50 MPa or less.

**18.** The capacitor deionization device according to claim 16 or 17, further comprising:

an ion absorbent between the electrode and the ion exchange membrane.

**19.** The capacitor deionization device according to any one of claims 16 to 18,

wherein air or gas is not included between the electrode and the ion exchange membrane.

FIG. 1A

FIG. 1B

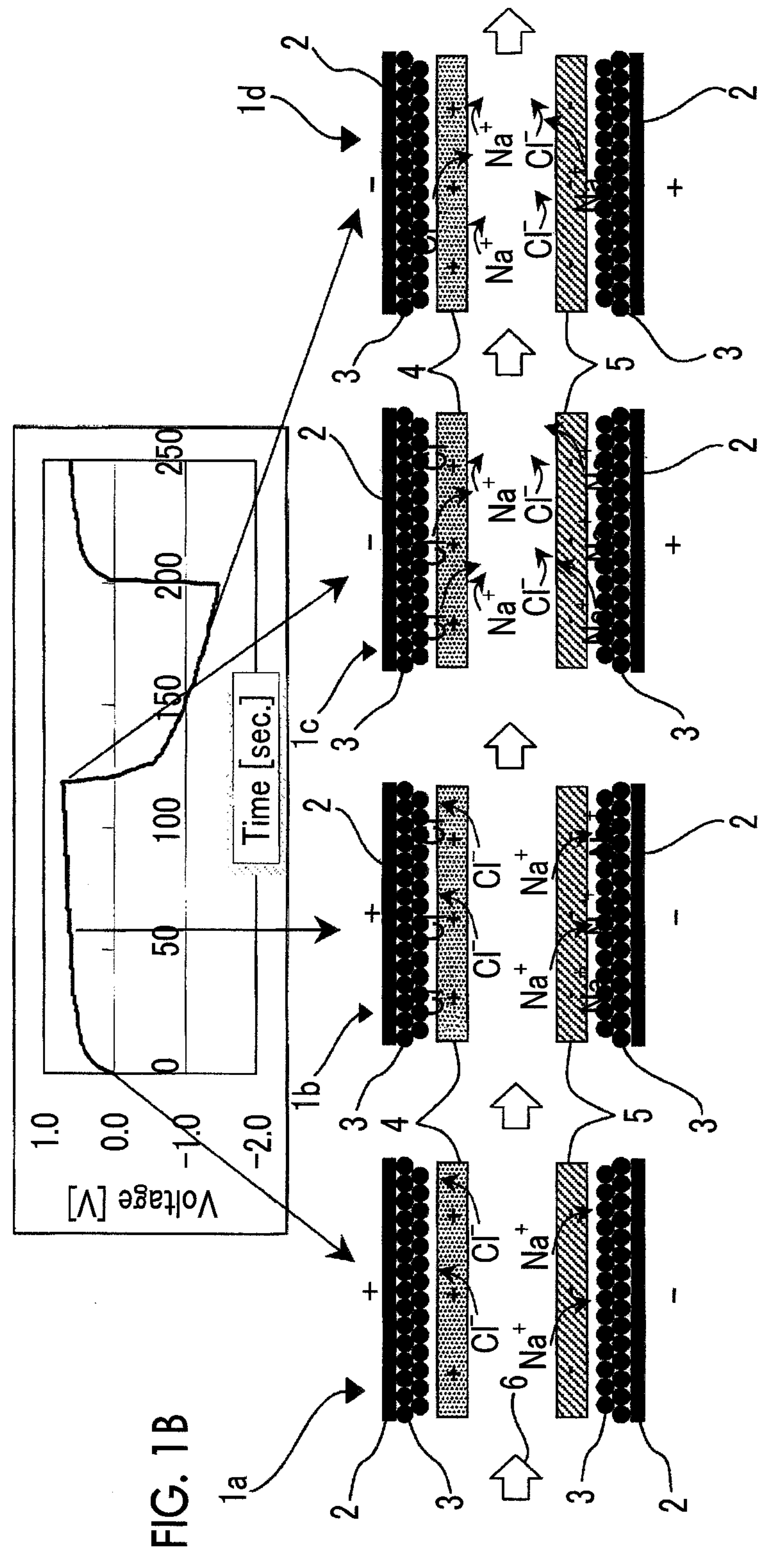
Voltage [V]
1.0
0.0
-1.0
-2.0
0
50
100
150
200
250
Time [sec.]
1a
1b
1c
1d
2
3
4
5
6
Na+
Cl−

**INTERNATIONAL SEARCH REPORT**

International application No. PCT/JP2014/079558

A. CLASSIFICATION OF SUBJECT MATTER
*C02F1/469*(2006.01)i, *B01D61/46*(2006.01)i, *B01D69/10*(2006.01)i, *B01D69/12*(2006.01)i, *B01D71/40*(2006.01)i

According to International Patent Classification (IPC) or to both national classification and IPC

B. FIELDS SEARCHED

Minimum documentation searched (classification system followed by classification symbols)
C02F1/469, B01D61/46, B01D69/10, B01D69/12, B01D71/40

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)
WPI

C. DOCUMENTS CONSIDERED TO BE RELEVANT

| Category* | Citation of document, with indication, where appropriate, of the relevant passages | Relevant to claim No. |
|---|---|---|
| A | JP 2013-163860 A (Asahi Kasei Chemicals Corp.), 22 August 2013 (22.08.2013), claims; examples & CN 103243347 A | 1-19 |
| A | JP 2004-193089 A (Toyobo Co., Ltd.), 08 July 2004 (08.07.2004), claims; examples & US 2005/0095486 A1 & EP 1477515 A1 & WO 2003/068853 A1 & CN 1633465 A & AU 2003208104 A & DK 1477515 T | 1-19 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 24 December 2014 (24.12.14) | 13 January 2015 (13.01.15) |

| Name and mailing address of the ISA/ | Authorized officer |
|---|---|
| Japan Patent Office | |
| Facsimile No. | Telephone No. |

Form PCT/ISA/210 (second sheet) (July 2009)

**INTERNATIONAL SEARCH REPORT**

International application No.
PCT/JP2014/079558

C (Continuation). DOCUMENTS CONSIDERED TO BE RELEVANT

| Category* | Citation of document, with indication, where appropriate, of the relevant passages | Relevant to claim No. |
|---|---|---|
| A | JP 2010-513018 A (General Electric Co.), 30 April 2010 (30.04.2010), claims; examples & JP 5259620 B & US 2008/0144256 A1 & EP 2129628 A & WO 2008/140556 A2 & CA 2672550 A & IL 198834 A & AU 2007353388 A & TW 200839817 A & BR PI0718331 A | 1-19 |
| A | JP 2010-517746 A (General Electric Co.), 27 May 2010 (27.05.2010), claims; examples & US 2008/0185294 A1 & EP 2109587 A & WO 2008/094367 A1 & CN 101595064 A & IL 199976 D & AU 2007345554 A & TW 200846291 A & BR PI0720810 A | 1-19 |
| A | JP 2013-063364 A (Kurita Water Industries Ltd.), 11 April 2013 (11.04.2013), claims; examples & WO 2013/038933 A1 & TW 201313619 A | 1-19 |
| A | JP 4135802 B2 (Organo Corp.), 20 August 2008 (20.08.2008), claims; examples & JP 2001-87769 A | 1-19 |
| A | WO 2010/150534 A1 (Kuraray Chemical Co., Ltd.), 29 December 2010 (29.12.2010), claims; examples (Family: none) | 1-19 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010513018 A
- JP 2008208190 A
- JP 2008266561 A
- JP 2010517746 A
- JP 2012506767 A
- JP 2013500157 A
- JP 2013063364 A
- JP 2001070947 A
- JP 2013231050 A


### Non-patent literature cited in the description


- Membrane Science. 2008, 319, , 217, , 218
- Experimental Methods in Membranology. Kitamishobo, 1984, 193-195